(19) **Europäisches Patentamt** / **European Patent Office** / **Office européen des brevets**

(11) **EP 4 614 194 A1**

(12) # EUROPEAN PATENT APPLICATION

(43) Date of publication:
**10.09.2025 Bulletin 2025/37**

(21) Application number: **25161700.7**

(22) Date of filing: **04.03.2025**

(51) International Patent Classification (IPC):
**G01V 1/36** $^{(2006.01)}$ **G01V 1/28** $^{(2006.01)}$
**G01V 1/38** $^{(2006.01)}$

(52) Cooperative Patent Classification (CPC):
**G01V 1/36; G01V 1/282; G01V 1/38;**
G01V 2210/32; G01V 2210/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.03.2024 US 202418594641**

(71) Applicants:
• **Services Pétroliers Schlumberger**
**75007 Paris (FR)**
Designated Contracting States:
**FR**

• **GeoQuest Systems B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **HALLIDAY, David Fraser**
**Crawley (GB)**
• **XU, Zhen**
**Houston (US)**

(74) Representative: **Schlumberger Intellectual Property Department**
**Parkstraat 83**
**2514 JG Den Haag (NL)**

(54) **SEISMIC IMAGING FRAMEWORK**

(57) A method can include accessing data that include seismic data of a subsurface region; automatically identifying a type of acquisition footprint artefact to reduce based at least in part on at least a portion of the data; automatically extracting acquisition footprint artefact reduction parameters based at least in part on the type of acquisition footprint artefact; and reducing the acquisition footprint artefact using the acquisition footprint artefact reduction parameters.

EP 4 614 194 A1

**Description**

BACKGROUND

Reflection seismology finds use in geophysics to estimate properties of subsurface formations. Reflection seismology may provide seismic data representing waves of elastic energy as transmitted by P-waves and S-waves, in a frequency range of approximately 1 Hz to approximately 100 Hz. In various instances, seismic data can also represent refractions and/or diving waves. Seismic data may be processed and interpreted to understand better composition, fluid content, extent and geometry of subsurface rocks. For example, a full-waveform inversion (FWI) may be implemented as part of a seismic data workflow for building a model of a subsurface environment where information from reflections, refractions and/or diving waves may be considered.

SUMMARY

A method can include accessing data that include seismic data of a subsurface region; automatically identifying a type of acquisition footprint artefact to reduce based at least in part on at least a portion of the data; automatically extracting acquisition footprint artefact reduction parameters based at least in part on the type of acquisition footprint artefact; and reducing the acquisition footprint artefact using the acquisition footprint artefact reduction parameters. A system can include a processor; memory operatively coupled to the processor; and processor-executable instructions stored in the memory to instruct the system to: access data that include seismic data of a subsurface region; automatically identify a type of acquisition footprint artefact to reduce based at least in part on at least a portion of the data; automatically extract acquisition footprint artefact reduction parameters based at least in part on the type of acquisition footprint artefact; and reduce the acquisition footprint artefact using the acquisition footprint artefact reduction parameters. One or more computer-readable storage media can include computer-executable instructions executable to instruct a computing system to: access data that include seismic data of a subsurface region; automatically identify a type of acquisition footprint artefact to reduce based at least in part on at least a portion of the data; automatically extract acquisition footprint artefact reduction parameters based at least in part on the type of acquisition footprint artefact; and reduce the acquisition footprint artefact using the acquisition footprint artefact reduction parameters. Various other examples of methods, systems, devices, etc., are also disclosed.

This summary is provided to introduce a selection of concepts that are further described below in the detailed description. This summary is not intended to identify key or essential features of the claimed subject matter, nor is it intended to be used as an aid in limiting the scope of the claimed subject matter.

BRIEF DESCRIPTION OF THE DRAWINGS

Features and advantages of the described implementations can be more readily understood by reference to the following description taken in conjunction with the accompanying drawings.

Figure 1 illustrates an example of a geologic environment;
Figure 2 illustrates examples of survey techniques;
Figure 3 illustrates examples of survey techniques;
Figure 4 illustrates examples of survey techniques;
Figure 5 illustrates an example of forward modeling and an example of inversion;
Figure 6 illustrates an example of a method;
Figure 7 illustrates examples of plots;
Figure 8 illustrates an example of a method;
Figure 9 illustrates examples of plots;
Figure 10 illustrates examples of plots;
Figure 11 illustrates examples of plots;
Figure 12 illustrates examples of plots;
Figure 13 illustrates examples of plots;
Figure 14 illustrates an example of a plot;
Figure 15 illustrates an example of a method;
Figure 16 illustrates an example of a method;
Figure 17 illustrates an example of a method;
Figure 18 illustrates an example of a method and an example of a computing system;
Figure 19 illustrates an example of a computational framework, and
Figure 20 illustrates components of a system and a networked system.

DETAILED DESCRIPTION

The following description includes the best mode presently contemplated for practicing the described implementations. This description is not to be taken in a limiting sense, but rather is made merely for the purpose of describing the general principles of the implementations. The scope of the described implementations should be ascertained with reference to the issued claims.

As mentioned, reflection seismology finds use in geophysics to estimate properties of subsurface formations. Reflection seismology can provide seismic data representing waves of elastic energy, as transmitted by P-waves and S-waves, in a frequency range of approximately 1 Hertz (Hz) to approximately 100 Hz or optionally less than 1 Hz and/or optionally more than 100 Hz. Seismic data may be processed and interpreted to understand better composition, fluid content, extent and geometry of subsurface rocks.

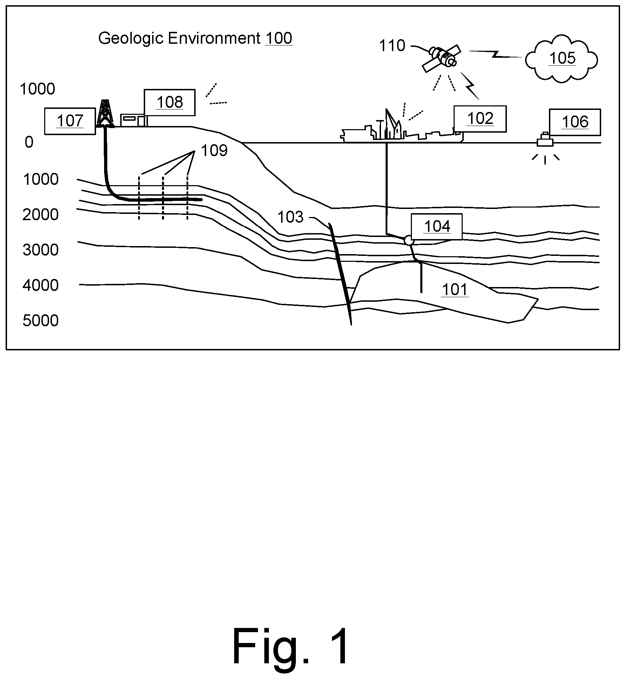

Figure 1 shows a geologic environment 100 (an environment that includes a sedimentary basin, a reservoir 101, a fault 103, one or more fractures 109, etc.) and an example of an acquisition technique 140 to acquire seismic data (see data 160). A system may process data acquired by the technique 140 to allow for direct or indirect management of sensing, drilling, injecting, extracting, etc., with respect to the geologic environment 100. In turn, further information about the geologic environment 100 may become available as feedback (optionally as input to the system). An operation may pertain to a reservoir that exists in the geologic environment 100 such as the reservoir 101. A technique may provide information (as an output) that specifies one or more location coordinates of a feature in a geologic environment, one or more characteristics of a feature in a geologic environment, etc.

The geologic environment 100 may be referred to as a formation or may be described as including one or more formations. A formation may be a unit of lithostratigraphy such as a body of rock that is sufficiently distinctive and continuous.

A system may be implemented to process seismic data, optionally in combination with other data. Processing of data may include generating one or more seismic attributes, rendering information to a display or displays, etc. A process or workflow may include interpretation, which may be performed by an operator that examines renderings of information (to one or more displays, etc.) and that identifies structure or other features within such renderings. Interpretation may be or include analyses of data with a goal to generate one or more models and/or predictions (about properties and/or structures of a subsurface region).

A system may include features of a framework such as the PETREL seismic to simulation software framework (SLB, Houston, Texas). Such a framework can receive seismic data and other data and allow for interpreting data to determine structures that can be utilized in building a simulation model.

A system may include add-ons or plug-ins that operate according to specifications of a framework environment. As an example, a framework may be implemented within or in a manner operatively coupled to the DELFI cognitive exploration and production (E&P) environment (SLB, Houston, Texas), which is a secure, cognitive, cloud-based collaborative environment that integrates data and workflows with digital technologies, such as artificial intelligence and machine learning. As an example, such an environment can provide for operations that involve one or more frameworks.

Seismic data may be processed using a framework such as the OMEGA framework (SLB, Houston, TX). The OMEGA framework provides features that can be implemented for processing of seismic data through prestack seismic interpretation and seismic inversion.

A framework for processing data may include features for 2D line and 3D seismic surveys. Modules for processing seismic data may include features for prestack seismic interpretation (PSI), optionally pluggable into a framework such as the DELFI framework environment.

In Figure 1, the geologic environment 100 includes an offshore portion and an on-shore portion. A geologic environment may be or include one or more of an offshore geologic environment, a seabed geologic environment, an ocean bed geologic environment, etc.

The geologic environment 100 may be outfitted with one or more of a variety of sensors, detectors, actuators, etc. Equipment 102 may include communication circuitry that receives and that transmits information with respect to one or more networks 105. Such information may include information associated with downhole equipment 104, which may be equipment to acquire information, to assist with resource recovery, etc. Other equipment 106 may be located remote from a well site and include sensing, detecting, emitting or other circuitry and/or be located on a seabed. Such equipment may include storage and communication circuitry that stores and that communicates data, instructions, etc. One or more satellites may be provided for purposes of communications, data acquisition, etc. Figure 1 shows a satellite 110 in communication with the network 105 that may be configured for communications, noting that the satellite may additionally or alternatively include circuitry for imagery (spatial, spectral, temporal, radiometric, etc.).

Figure 1 also shows the geologic environment 100 as optionally including equipment 107 and 108 associated with a well that includes a substantially horizontal portion that may intersect with one or more of the one or more fractures 109; consider a well in a shale formation that may include natural fractures, artificial fractures (hydraulic fractures) or a combination of natural and artificial fractures. The equipment 107 and/or 108 may include components, a system, systems, etc. for fracturing, seismic sensing, analysis of seismic data, assessment of one or more fractures, etc.

A system may be used to perform one or more workflows. A workflow may be a process that includes a number of worksteps. A workstep may operate on data to create new data, to update existing data, etc. A system may operate on one or more inputs and create one or more results based on one or more algorithms. A workflow may be a workflow implementable in the PETREL software that operates on seismic data, seismic attribute(s), etc. A workflow may be a process implementable in the DELFI environment, etc. A workflow may include one or more worksteps that access a plug-in (external executable code, etc.). A workflow may include rendering information to a display (a display device). A workflow may include receiving instructions to interact with rendered information to process information and optionally render processed information. A workflow may include transmitting information that may control, adjust, initiate, etc. one or more operations of equipment associated with a geologic environment (in the environment, above the environment, etc.).

As an example, an acquisition technique can be utilized to perform a seismic survey. A seismic survey can acquire various types of information, which can include various types of waves (e.g., P, SV, SH, etc.). A P-wave can be an elastic body wave or sound wave in which particles oscillate in the direction the wave propagates. P-waves incident on an interface (at other than normal incidence, etc.) may produce reflected and transmitted S-waves (e.g., "converted" waves). An S-wave or shear wave may be an elastic body wave in which particles oscillate perpendicular to the direction in which the wave propagates. S-waves may be generated by a seismic energy source (e.g., other than an air gun). S-waves may be converted to P-waves. S-waves tend to travel more slowly than P-waves and do not travel through fluids that do not support shear. Recording of S-waves involves use of one or more receivers operatively coupled to earth (e.g., capable of receiving shear forces with respect to time). Interpretation of S-waves may allow for determination of rock properties such as fracture density and orientation, Poisson's ratio and rock type by crossplotting P-wave and S-wave velocities, and/or by other techniques. Parameters that may characterize anisotropy of media (e.g., seismic anisotropy) include the Thomsen parameters $\varepsilon$, $\delta$ and $\gamma$.

Seismic data may be acquired for a region in the form of traces. For example, a technique can utilize a source for emitting energy where portions of such energy (e.g., directly and/or reflected) may be received via one or more sensors (e.g., receivers). Energy received may be discretized by an analog-to-digital converter that operates at a sampling rate. Acquisition equipment may convert energy signals sensed by a sensor to digital samples at a rate of one sample per approximately 4 milliseconds (ms). Given a speed of sound in a medium or media, a sample rate may be converted to an approximate distance. The speed of sound in rock may be of the order of around 5 kilometers (km) per second. Thus, a sample time spacing of approximately 4 ms would correspond to a sample "depth" spacing of about 10 meters (e.g., assuming a path length from source to boundary and boundary to sensor). A trace may be about 4 seconds in duration; thus, for a sampling rate of one sample at about 4 ms intervals, such a trace would include about 1000 samples where latter acquired samples correspond to deeper reflection boundaries. If the 4 second trace duration of the foregoing scenario is divided by two (e.g., to account for reflection), for a vertically aligned source and sensor, the deepest boundary depth may be estimated to be about 10 kilometer (km) (e.g., assuming a speed of sound of about 5 km per second).

As mentioned, seismic data may be acquired and analyzed to understand better subsurface structure of a geologic environment. Reflection seismology finds use in geophysics, for example, to estimate properties of subsurface formations. As an example, reflection seismology may provide seismic data representing waves of elastic energy (e.g., as transmitted by P-waves and S-waves, in a frequency range of approximately 1 Hz to approximately 100 Hz or optionally less than 1 Hz and/or optionally more than 100 Hz). Seismic data may be processed and interpreted, for example, to understand better composition, fluid content, extent and geometry of subsurface rocks.

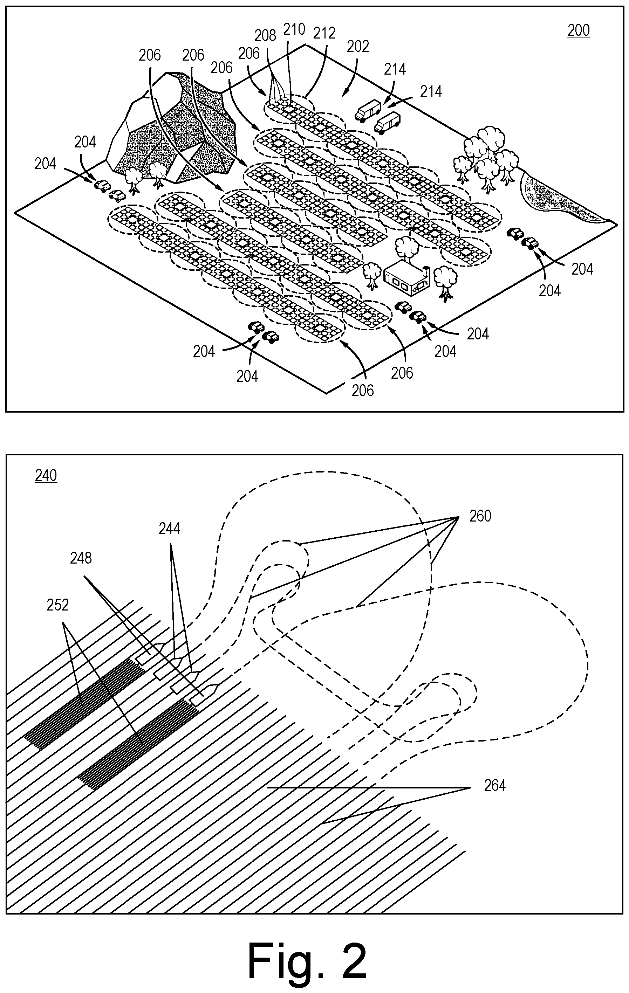

Figure 2 shows an example of a simplified schematic view of a land seismic data acquisition system 200 and an example of a simplified schematic view of a marine seismic data acquisition system 240.

As shown with respect to the system 200, an area 202 to be surveyed may or may not have physical impediments to direct wireless communication between a recording station 214 (e.g., which may be a recording truck) and a vibrator 204. A plurality of vibrators 204 may be employed, as well as a plurality of sensor unit grids 206, each of which may have a plurality of sensor units 208.

As illustrated in Figure 2 with respect to the system 200, approximately 24 to about 28 sensor units 208 may be placed in a vicinity (e.g., a region) around a base station 210. The number of sensor units 208 associated with each base station 210 may vary from survey to survey. Circles 212 indicate an approximate range of reception for each base station 210.

In the system 200 of Figure 2, the plurality of sensor units 208 may be employed in acquiring and/or monitoring land-seismic sensor data for the area 202 and transmitting the data to the one or more base stations 210. Communications between the vibrators 204, the base stations 210, the recording station 214, and the seismic sensors 208 may be wireless (e.g., at least in part via air for a land-based system; or optionally at least in part via water for a sea-based system).

In the system 240 of Figure 2, one or more source vessels 240 may be utilized with one or more streamer vessels 248 or a vessel or vessels may tow both a source or sources and a streamer or streamers 252. In the example of Figure 2, the vessels 244 and 248 (e.g., or just the vessels 248 if they include sources) may follow predefined routes (e.g., paths) for an acquisition geometry that includes inline and crossline dimensions. As shown, routes 260 can be for maneuvering the vessels to positions 264 as part of the survey. As an example, a marine seismic survey may call for acquiring seismic data during a turn (e.g., during one or more of the routes 260).

The example systems 200 and 240 of Figure 2 demonstrate how surveys may be performed according to an acquisition geometry that includes dimensions such as inline and crossline dimensions, which may be defined as x and y dimensions in a plane or surface where another dimension, z, is a depth dimension. As explained, time can be a proxy for depth, depending on various factors, which can include knowing how many reflections may have occurred as a single reflection may mean that depth of a reflector can be approximated using one-half of a two-way traveltime, some indication of the speed of sound in the medium and positions of the receiver and source (e.g., corresponding to the two-way traveltime).

Two-way traveltime (TWT) can be defined as the elapsed time for a seismic wave to travel from its source to a given reflector and return to a receiver (e.g., at a surface, etc.). As an example, a minimum two-way traveltime can be defined to be that of a normal-incidence wave with zero offset.

As an example, a seismic survey can include points referred to as common midpoints (CMPs). In multichannel seismic acquisition, a CMP is a point that is halfway between a source and a receiver that is shared by a plurality of source-receiver pairs. In such a survey, various angles may be utilized that may define offsets (e.g., offsets from a CMP, etc.). In a CMP approach, redundancy among source-receiver pairs can enhance quality of seismic data, for example, via stacking of the seismic data. A CMP can be vertically above a common depth point (CDP), or common reflection point (CRP). As an example, seismic data may be presented as a gather, which can be an image of seismic traces that share an acquisition parameter, such as a common midpoint gather (CMP gather or CMG), which contains traces having a common midpoint (CMP). In such an example, a CMG may be presented with respect to a horizontal dimension and a time dimension, which may be a TWT dimension.

As an example, a seismic survey can include points referred to as downward reflection points (DRPs). A DRP is a point where seismic energy is reflected downwardly. For example, where multiple interfaces exist, seismic energy can reflect upwardly from one interface, reach a shallower interface and then reflect downwardly from the shallower interface.

As an example, a seismic survey may be an amplitude variation with offset (AVO) survey. Such a survey can record variation in seismic reflection amplitude with change in distance between position of a source and position of a receiver, which may indicate differences in lithology and fluid content in rocks above and below a reflector.

AVO analysis can allow for determination of one or more characteristics of a subterranean environment (e.g., thickness, porosity, density, velocity, lithology and fluid content of rocks, etc.). As an example, gas-filled sandstone might show increasing amplitude with offset; whereas, a coal might show decreasing amplitude with offset. AVO analysis can be suitable for young, poorly consolidated rocks, such as those in the Gulf of Mexico.

As an example, a method may be applied to seismic data to understand better how structural dip may vary with respect to offset and/or angle as may be associated with emitter-detector (e.g., source-receiver) arrangements of a survey, for example, to estimate how suitable individual offset/angle gathers are for AVO imaging. As explained, a gather may be a collection of seismic traces that share an acquisition parameter, such as a common midpoint (CMP), with other collections of seismic traces. For example, consider an AVO survey that includes a plurality of emitter-detector arrangements (e.g., source-receiver pairs) with corresponding angles defined with respect to a common midpoint (CMP). Given a CMP, acquired survey data may be considered to cover a common subsurface region (e.g., a region that includes the midpoint).

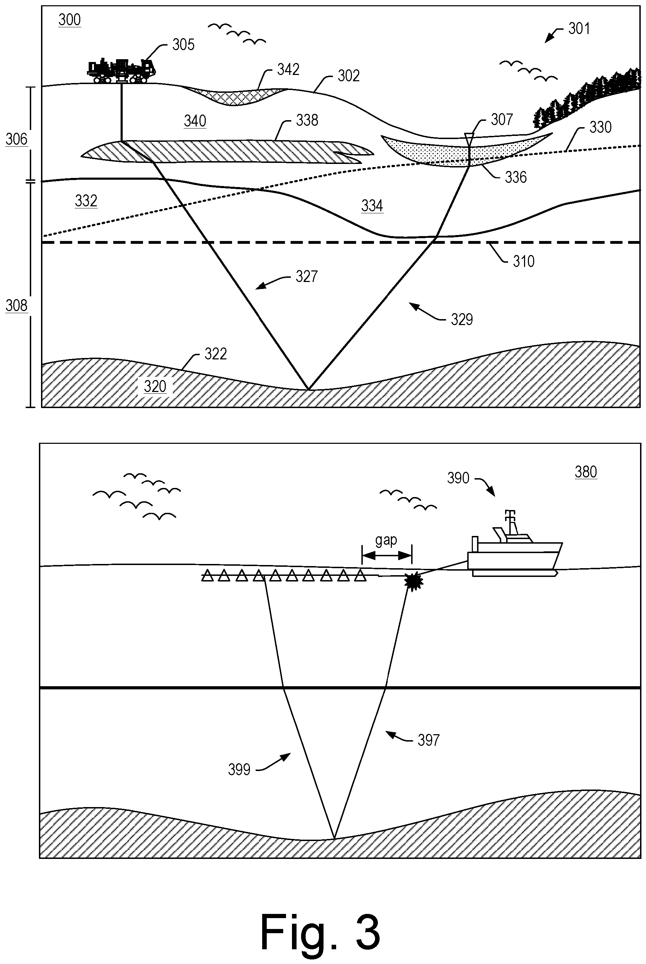

Figure 3 shows an example of a land system 300 and an example of a marine system 380. The land system 300 is shown in a geologic environment 301 that includes a surface 302, a source 305 at the surface 302, a near-surface zone 306, a receiver 307, a bedrock zone 308 and a datum 310 where the near-surface zone 306 (e.g., near-surface region) may be defined at least in part by the datum 310, which may be a depth or layer or surface at which data above are handled differently than data below. For example, a method can include processing seismic data that aims to "place" the source 305 and the receiver 307 on a datum plane defined by the datum 310 by adjusting (e.g., "correcting") traveltimes for propagation through the near-surface region (e.g., a shallower subsurface region).

In the example system 300 of Figure 3, the geologic environment 301 can include various features such as, for example, a layer 320 that defines an interface 322 that can be a reflector, a water table 330, a leached zone 332, a glacial scour 334, a buried river channel 336, a region of material 338 (e.g., ice, evaporates, volcanics, etc.), a high velocity zone 340, and a region of material 342 (e.g., Eolian or peat deposits, etc.).

In Figure 3, the land system 300 is shown with respect to downgoing rays 327 (e.g., downgoing seismic energy) and upgoing rays 329 (e.g., upgoing seismic energy). As illustrated the rays 327 and 329 pass through various types of materials and/or reflect off of various types of materials.

Various types of seismic surveys can contend with surface unevenness and/or near-surface heterogeneity. For example, a shallow subsurface can include large and abrupt vertical and horizontal variations that may be, for example, caused by differences in lithology, compaction cementation, weather, etc. Such variations can generate delays or advances in arrival times of seismic waves passing through them relative to waves that do not. By accounting for such time differences, a seismic image may be of enhanced resolution with a reduction in false structural anomalies at depth, a reduction in mis-ties between intersecting lines, a reduction in artificial events created from noise, etc.

As an example, a method can include adjusting for such time differences by applying a static, or constant, time shift to a seismic trace where, for example, applying a static aims to place a source and receiver at a constant datum plane below a near-surface zone. As an example, an amount by which a trace is adjusted can depend on one or more factors (e.g., thickness, velocity of near-surface anomalies, etc.).

In Figure 3, the datum 310 is shown, for example, as a plane, below which strata may be of particular interest in a seismic imaging workflow. In a three-dimensional model of a geologic environment, a near surface region may be defined, for example, at least in part with respect to a datum. As an example, a velocity model may be a multidimensional model that models at least a portion of a geologic environment.

In the example of Figure 3, the source 305 can be a seismic energy source such as a vibrator. As an example, a vibrator may be a mechanical source that delivers vibratory seismic energy to the Earth for acquisition of seismic data. As an example, a vibrator may be mounted on a vehicle (e.g., a truck, etc.). As an example, a seismic source or seismic energy source may be one or more types of devices that can generate seismic energy (e.g., an air gun, an explosive charge, a vibrator, etc.).

Vibratory seismic data can be seismic data whose energy source is a vibrator that may use a vibrating plate to generate waves of seismic energy. As an example, the frequency and the duration of emitted energy can be controllable, for example, frequency and/or duration may be varied according to one or more factors (e.g., terrain, type of seismic data desired, etc.).

As an example, a vibrator may emit a linear sweep of a duration that is of the order of seconds (e.g., at least seven seconds, etc.), for example, beginning with high frequencies and decreasing with time (downsweeping) or going from low to high frequency (upsweeping). As an example, frequency may be changed (e.g., varied) in a nonlinear manner (e.g., certain frequencies are emitted longer than others, etc.). In various vibrator scenarios, resulting source wavelet can be one that is not impulsive. As an example, parameters of a vibrator sweep can include start frequency, stop frequency, sweep rate and sweep length.

As an example, a vibrator may be employed in land acquisition surveys for areas where explosive sources may be contraindicated (e.g., via regulations, etc.). As an example, more than one vibrator can be used simultaneously (e.g., in an effort to improve data quality, etc.).

As an example, a receiver may be a may be a UNIQ sensor unit (SLB, Houston, Texas). As an example, a sensor unit can include a geophone, which may be configured to detect motion in a single direction. As an example, a geophone may be configured to detect motion in a vertical direction. As an example, three mutually orthogonal geophones may be used in combination to collect so-called 3C seismic data. As an example, a sensor unit that can acquire 3C seismic data may allow for determination of type of wave and its direction of propagation. As an example, a sensor assembly or sensor unit may include circuitry that can output samples at intervals of 1 ms, 2 ms, 4 ms, etc. As an example, an assembly or sensor unit can include an analog to digital converter (ADC) such as, for example, a 24-bit sigma-delta ADC (e.g., as part of a geophone or operatively coupled to one or more geophones). As an example, a sensor assembly or sensor unit can include synchronization circuitry such as, for example, GPS synchronization circuitry with an accuracy of about plus or minus 12.5 microseconds. As an example, an assembly or sensor unit can include circuitry for sensing of real-time and optionally continuous tilt, temperature, humidity, leakage, etc. As an example, an assembly or sensor unit can include calibration circuitry, which may be self-calibration circuitry.

In Figure 3, the system 380 includes equipment 390, which can be a vessel that tows one or more sources and one or more streamers (e.g., with receivers). In the system 380, a source of the equipment 390 can emit energy at a location and a receiver of the equipment 390 can receive energy at a location. The emitted energy can be at least in part along a path of the downgoing energy 397 and the received energy can be at least in part along a path of the upgoing energy 399.

In various systems, for one or more reasons, a gap in coverage may exist. For example, in the system 380 a gap is identified and labeled where the gap may be defined as a distance between a seismic source and a seismic receiver. In such an example, the distance may be considered a practical or a safe distance for locating a seismic receiver from a seismic source. If a seismic receiver is too close to a seismic source, the seismic receiver may experience a rather large shock wave and/or may otherwise experience energy that may be quite high and raise concerns with calibration, dynamic range, etc.

In the examples of Figure 3, the paths are illustrated as single reflection paths for sake of simplicity. In the environments illustrated, additional interactions, reflections can be expected. For example, ghosts may be present. A ghost can be defined as a short-path multiple, or a spurious reflection that occurs when seismic energy initially reverberates upward from a shallow subsurface and then is reflected downward, such as at the base of weathering or between sources and receivers and the sea surface. As an example, the equipment 390 can include a streamer that is configured to position receivers a distance below an air-water interface such that ghosts can be generated where upgoing energy impacts the air-water interface and then reflects downward to the receivers. In such an example, a process may be applied that aims to "deghost" seismic data. Deghosting can be applied to marine seismic survey data where such a process aims to attenuate signals that are downgoing from an air-water interface (e.g., a sea surface interface). As mentioned, one or more other techniques, technologies, etc., may be utilized for seismic surveying (e.g., ocean bottom cables, ocean bottom nodes, etc.).

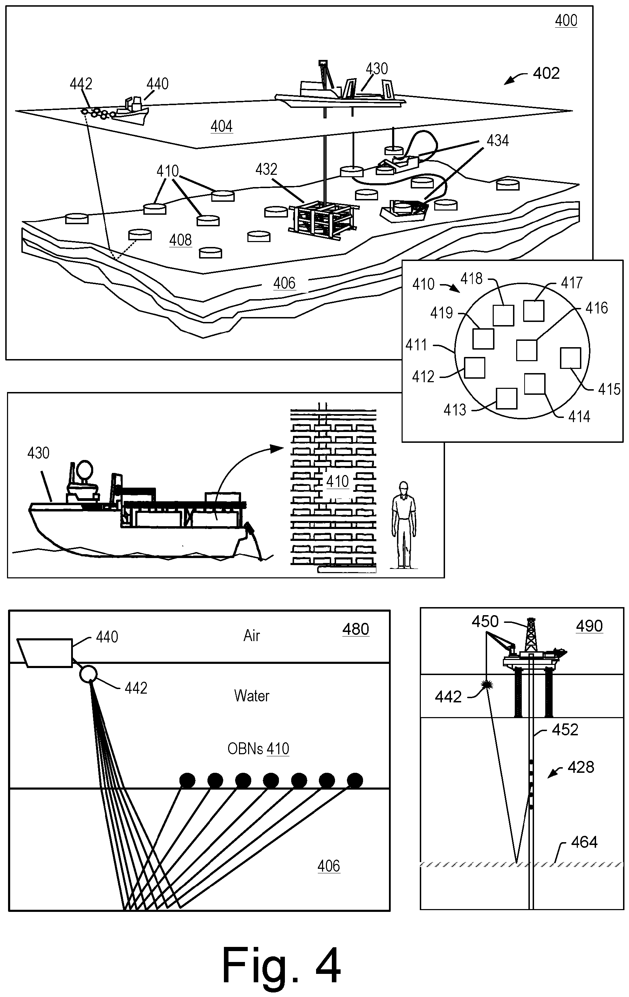

Figure 4 shows a system 400 for acquisition of information in a geologic environment 402 that includes an air-water surface 404, a formation 406 and a seabed 408 (e.g., water-bed interface) where nodes 410 are positioned on the seabed 408. Equipment may be utilized to position the nodes 410 on the seabed 404 and retrieve the nodes 410 from the seabed 404. Such equipment may include one or more vessels 430, one or more carriers 432 and one or more vehicles 434, which may be autonomous, semi-autonomous, etc. (e.g., remotely operated vehicles (ROVs), etc.). The system 400 may include a seismic source vessel 440 that includes one or more seismic sources 442. The seismic source vessel 440 may travel a path while, at times, emitting seismic energy from the one or more sources 442. In such an approach, the nodes 410 can receive portions of the seismic energy, which can include portions that have travelled through the formation 406. Analysis of received seismic energy by the nodes 410 may reveal features of the formation 406.

In Figure 4, the vessel 430 is shown as including nodes 410 as cargo arranged on racks. The nodes 410 can be deployed to form an array, for example, according to a survey plan. An array of nodes may be cabled or un-cabled. A cable may be relatively light weight and utilized to deploy a node receiver line with nodes coupled to the cable at spaced intervals. A rack can be utilized to securely store nodes in slots along multiple rows and columns. An individual slot may include a communications portal that can establish communication via contact(s) and/or contactless/wireless with an individual node seated in the individual slot for download of information, etc. A rack can include charger circuitry that can charge one or more batteries of an individual node seated in an individual slot. A node can be sealed such that components (e.g., circuitry, one or more batteries, etc.) are not exposed to water when the node is deployed on an underwater bed. A seal may be a hermetic seal that aims to prevent passage of air and/or water. A seal or seals can aim to prevent intrusion of water from an exterior region to an interior region of a node. Such a node can be considered to be water-tight. A sealed node can be a self-contained piece of equipment that can sense information independent of other equipment when positioned on an underwater surface that may be a seabed.

A rack may be dimensioned in accordance with shipping container dimensions such as about 3 meters by about 7 meters by about 3 meters. As shown in Figure 4, with reference to a silhouette of a person that is about 1.8 meters in height, a node may be about a meter or less in diameter and about half a meter in height or less.

In Figure 4, the one or more sources 442 may be an air gun or air gun array (e.g., a source array). A source can produce a pressure signal that propagates through water into a formation where acoustic and elastic waves are formed through interaction with features (e.g., structures, fluids, etc.) in the formation. Acoustic waves can be characterized by pressure changes and a particle displacement in a direction of which the acoustic wave travels. Elastic waves can be characterized by a change in local stress in material and a particle displacement. Acoustic and elastic waves may be referred to as pressure and shear waves, respectively; noting that shear waves may not propagate in water. Collectively, acoustic and elastic waves may be referred to as a seismic wavefield.

Material in a formation may be characterized by one or more physical parameters such as density, compressibility, and porosity. In the geologic environment 402 of Figure 4, energy emitted from the one or more sources 442 can be transmitted to the formation 406; however, elastic waves that reach the seabed 408 will not propagate back into the water. Such elastic waves may be received by sensors of the nodes 410. The nodes 410 can include motion sensors that can measure one or more of displacement, velocity and acceleration. A motion sensor may be a geophone, an accelerometer, etc. As to pressure waves, the nodes 410 can include pressure wave sensors such as hydrophones.

In Figure 4, the nodes 410 can include sensors for acquiring seismic wavefield information at the seabed 408. Each of the nodes 410 can include one or more hydrophones and/or one or more motion sensors (e.g., one or more geophones, one or more accelerometers, etc.).

A node can include various types of circuitry. Such circuitry can include circuitry that can digitize (e.g., analog to digital conversion (ADC) circuitry) and can include circuitry that can record signals (e.g., a microcontroller, a processor, etc., operatively coupled to memory). Each of the nodes 410 can include a housing 411, sensors 412 and 413, one or more microcontrollers or processors 414, one or more batteries 415, memory 416, ADC circuitry 417, a compass 418, communication circuitry 419, etc. As an example, a node can include one or more clocks, which may be amenable to calibration, synchronization, etc. For example, consider synchronizing to a signal, calibrating against a value, etc. As an example, a node can provide for receiving seismic energy and generating digital data that can be coded or otherwise stamped with information corresponding to time (e.g., according to one or more clocks). Various components of a node may be operatively coupled via wires, connectors, etc. A node can include one or more circuit boards (e.g., printed circuit boards, etc.) that can provide for electrical connections between various components, etc.

After deployment, one or more acoustic techniques may be utilized to determine node locations. A technique may employ acoustic pinging where acoustic pingers emit relatively high-frequency pings that are substantially above the maximum frequency of interest for seismic applications. Such relatively high-frequency acoustic signals can be picked up by one or more seismic sensors. Triangulation or one or more other techniques may be utilized to determine node locations for nodes deployed on an underwater surface such as a seabed.

Nodes may be utilized to acquire information spatially and temporally such as in a time-lapse seismic survey, which may be a four-dimensional seismic survey (e.g., a 4D seismic survey). A seismic image of a formation may be made for a first survey and a seismic image of the formation may be made for a second survey where the first and second surveys are separated by time (e.g., a lapse in time). In such an approach, a comparison of the images can infer changes in formation properties that may be tied to production of hydrocarbons, injection of water or gas, etc.

A first survey may be referred to as a baseline survey, while a subsequent survey may be referred to as a monitor survey. To minimize artifacts in differences between seismic images from successive lapses, a monitor survey may aim to replicate a configuration of a corresponding baseline survey. Where nodes are utilized at various positions on a seabed for a baseline survey, a monitor survey may aim to place nodes on the seabed in a manner that replicates the various positions of the nodes of the baseline survey. For the monitor survey, the nodes may be the same nodes, include some of the same nodes, include some different nodes or may be different nodes. A service may have a stock of nodes that can be utilized for various surveys where once a survey is complete, the nodes are retrieved, transported and positioned for another survey. Such a service may update, replace, etc., nodes from time to time.

A position to within a few meters of accuracy of one or more nodes may be determined via one or more of GPS, an acoustic positioning system (e.g., a short-baseline (SBL) or ultra-short baseline (USBL) acoustic system), and one or more other types of systems.

A node can include sensor circuitry for acquiring measurements of a seismic pressure wavefield and its gradient; consider sensor circuitry that can measure a seismic pressure wavefield and its gradient in vertical and crossline directions.

A node can include point-receiver circuitry. A point-receiver approach can combine hydrophones with tri-axial microelectromechanical system (MEMS) accelerometers. In such an approach, the MEMS accelerometers can measure a substantial bandwidth of particle acceleration due to seismic wavefields. Measurements of particle acceleration can be directly related to a gradient in a pressure wavefield. A node may include the ISOMETRIX technology, which includes point-receiver circuitry (SLB, Houston, Texas).

In the example of Figure 4, one of the nodes 410 may be connected to one or more other nodes of the nodes 410 via a cable. A vessel may include a cable that is operatively coupled to at least one node. In the system 400 of Figure 4, nodes may be deployed according to a survey plan in a grid pattern; consider placement of nodes on a seabed according to an x,y grid where distance between adjacent nodes may be of the order of hundreds of meters. As shown in the system 400, the seismic source vessel 440 may be employed with the one or more sources 442 that can emit energy, which can, in turn, be received via one or more of the nodes 410.

As an example, a common shot approach 480 may be utilized, as illustrated via the formation 406, the OBNs 410, the seismic source vessel 440 and the one or more sources 442. As explained, the vessel 440 can tow one or more sources at or below an air-water interface where the OBNs 410 can be positioned on a water-formation interface (e.g., a seafloor, seabed, ocean bottom, sea bottom, etc.). As shown, the energy of the source or the sources 442 passes through the water and then into the formation 406 where a portion of the energy is reflected at an interface (e.g., a reflector). As shown, energy can reflect off the interface and progress upwardly to the OBNs 410, which can be receivers that record the energy.

When seismic traces of a gather come from a single shot and many receivers, they can form a common shot gather; whereas, a single receiver with many shots can form a common receiver gather. A shot gather is a plot of traces with respect to line distance (e.g., an inline or a crossline series of receivers) with respect to time. Such a plot may be referred to as an image, which includes information about a subsurface region; noting that traces may be processed to generate one or more other types of images of a subsurface region.

Also shown in Figure 4 is an inset of a zero-offset vertical seismic profile (VSP) scenario 490. In such a scenario, an acquisition geometry may be limited to an ability to position equipment that is physically coupled to a rig 450. As shown, for given the acquisition geometry, there may be no substantial offset between the source 442 and a bore 452. In such a scenario, a zero-offset VSP may be acquired where seismic waves travel substantially vertically down to a reflector (see the layer 464) and up to receivers 428, which may be a receiver array. Where one or more vessels are employed, one or more other types of surveys may be performed. A three-dimensional VSP may be performed using a vessel. As an example, a VSP may be performed using one or more nodes, etc.

Some examples of techniques that can process seismic data include migration and migration inversion, which may be implemented for purposes such as structural determination and subsequent amplitude analysis. In seismic exploration, signal can be defined as a part of a recorded seismic record (e.g., events) that is decipherable and useful for determining subsurface information (e.g., relevant to the location and production of hydrocarbons, etc.). Migration and migration inversion are techniques that can be used to extract subsurface information from seismic reflection data.

As an example, a migration technique can include predicting a coincident source and receiver at depth at a time equal to zero; an approach that may be extended for heterogeneous media and to accommodate two-way propagation in a local sense at points from the source to a target reflector and back from the reflector to the receiver and in a global sense, separately for each of the two legs from the source to the reflector and from the reflector to the receiver. Such an approach for two-way wave propagation migration may provide for quantitative and definitive definition of the roles of primaries and multiples in migration where, for example, migration of primaries can provide subsurface structure and amplitude information.

Various techniques that can be used to predict a wavefield inside a volume from (measured) values of a field on a surface surrounding the volume involve Green's theorem. Green's theorem may be implemented, for example, as part of a process for a finite volume model prediction of the so-called "source and receiver experiment" for two-way waves at depth. As an example, Green's theorem can predict a wavefield at an arbitrary depth z between a shallower depth "a" and a deeper depth "b".

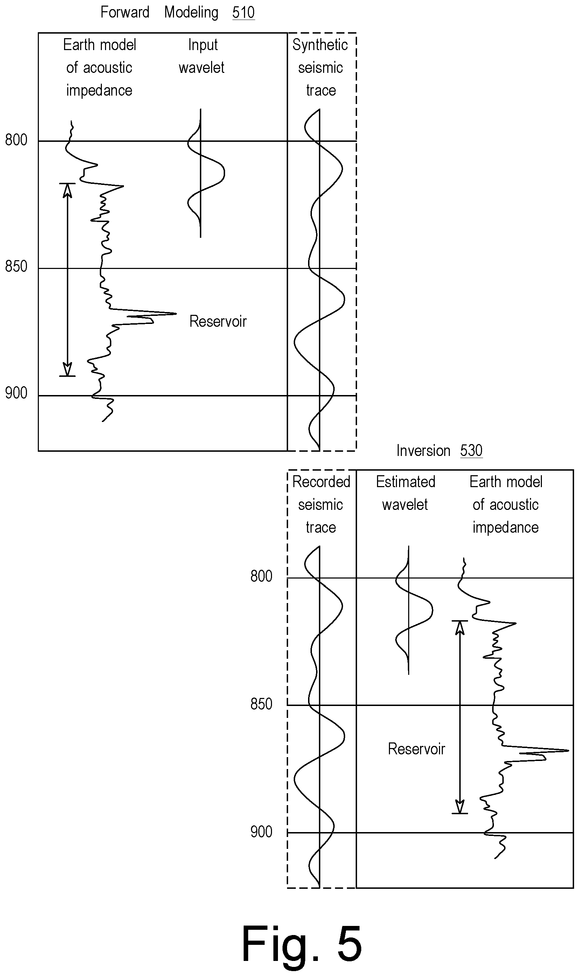

Figure 5 shows an example of forward modeling 510 and an example of inversion 530 (e.g., an inversion or inverting). As shown, the forward modeling 510 progresses from an earth model of acoustic impedance and an input wavelet to a synthetic seismic trace while the inversion 530 progresses from a recorded seismic trace to an estimated wavelet and an Earth model of acoustic impedance. As an example, forward modeling can take a model of formation properties (e.g., acoustic impedance as may be available from well logs) and combine such information with a seismic wavelength (e.g., a pulse) to output one or more synthetic seismic traces while inversion can commence with a recorded seismic trace, account for effect(s) of an estimated wavelet (e.g., a pulse) to generate values of acoustic impedance for a series of points in time (e.g., depth).

Acoustic impedance is the opposition of a medium to a longitudinal wave motion. Acoustic impedance is a physical property whose change determines reflection coefficients at normal incidence, that is, seismic P-wave velocity multiplied by density. Acoustic impedance characterizes the relationship between the acting sound pressure and the resulting particle velocity.

During the propagation of seismic wave along a ray path, a seismic wave transmits through or reflects at a material boundary and/or converts its vibration mode between P-wave and S-wave. An observed amplitude of a seismic wave depends on an acoustic impedance contrast at a material boundary between an upper medium and a lower medium. Acoustic impedance, Z, can be defined by a multiplication of density, $\rho$, and seismic velocity, Vp, in each media. Acoustic impedance Z tends to be proportional to Vp for the many sedimentary and crustal rocks (e.g., granite, anorthite, pyrophyllite, and quartzite), except for some ultramafic rocks (e.g., dunite, eclogite, and peridotite) in the mantle.

In various instances, an inversion problem may be ill-posed for one or more reasons. Recorded data can include discrepancies including, for example, missing near offsets (e.g., due to gaps, etc.), and multiple events with other artifacts that contaminate the model of primaries that is inverted for. Artifacts can also be associated with inversion inaccuracies coming from inaccurate physics simulation (e.g., inversion of 3D data using 2D inversion, wavelet estimation errors, etc.).

For various reasons, a seismic survey may have coverage issues. For example, certain subsurface structures may impact "illumination" of one or more regions by seismic energy. In seismology, illumination can refer to an ability for seismic energy to fall on a reflector and thus be available to be reflected. Illumination can depend on source-receiver configuration (e.g., a survey geometry) and velocity distribution such as, for example, irregular velocity contrasts that may bend raypaths differently than adjacent raypaths. Various regions can have complicated velocity variations, for example, consider high-velocity contrast regions and subsalt regions.

A subsalt region can be an exploration and production play type in which prospects exist below salt layers. Prospecting for such regions below salt layers can pose challenges with respect to illumination, which may result in seismic data of poor quality. The Gulf of Mexico includes subsalt-producing fields; noting that subsalt regions also exist in other parts of the world such as, for example, offshore Brazil in the Santos, Campos and Espirito Santo basins.

A region below salt (e.g., a subsalt region) may be referred to as a pre-salt layer. As an example, a region may include a diachronous series of geological formations on a continental shelf of an extensional basin formed after the break-up of Gondwana, which may be characterized by deposition of thick layers of evaporites that can be composed mostly of salt. In various regions, some petroleum generated from sediments in a pre-salt layer may not have migrated upward to post-salt layers above, for example, due to one or more salt domes. Such types of regions exist off the coast of Africa and the coast of Brazil. Total pre-salt hydrocarbon reserves are estimated to be a substantial fraction of the world's hydrocarbon reserves.

Off the coast of Brazil, oil and natural gas reserves lie below an approximately 2,000 m (6,600 feet (ft)) thick layer of salt, which in turn is beneath more than 2,000 m (6,600 ft) of post-salt sediments in places, which in turn is under water depths between 2,000 m and 3,000 m (6,600 ft and 9,800 ft) in the South Atlantic. Drilling through rock and salt to extract pre-salt oil and gas can be complicated and costly. As explained, seismic surveying can be challenging in such regions, which can introduce uncertainties in planning, drilling, etc.

A 3D seismic dataset can be referred to as a cube or volume of data; a 2D seismic data set can be referred to as a panel of data. To interpret 3D data, processing can be on the "interior" of the cube, which tends to be an intensive computation process because massive amounts of data are involved. For example, a 3D dataset can range in size from a few tens of megabytes to several terabytes or more.

A 3D seismic data volume can include a vertical axis that is two-way traveltime (TWT) rather than depth and can include data values that are seismic amplitudes values. Such data may be defined at least in part with respect to a time axis where a trace may be a data vector of values with respect to time.

Acquired field data may be formatted according to one or more formats. For example, consider a well data format AAPG-B, log curve formats LAS or LIS-II, seismic trace data format SEGY, shotpoint locations data formats SEGP1 or UKOOA and wellsite data format WITS.

As to SEGY, which may be referred to as SEG-Y or SEG Y, it is a file format developed by the Society of Exploration Geophysicists (SEG) for storing geophysical data. It is an open standard, and is controlled by the SEG Technical Standards Committee, a non-profit organization. The format was originally developed in 1973 to store single-line seismic reflection digital data on magnetic tapes. The most recent revision of the SEG-Y format was published in 2017, named the rev 2.0 specification and includes certain legacies of the original format (referred as rev 0), such as an optional SEG-Y tape label, the main 3,200-byte textual EBCDIC character encoded tape header and a 400-byte binary header.

A format referred to as ZGY (or zgy) is a file format that can be used for storing 3D seismic trace data. Data may be converted to ZGY from SEG-Y format. The ZGY format supports compression of data. ZGY uses bricking to store multiple resolutions of a dataset. As an example, a brick may include 64x64x64 samples, though brick sizes can vary. ZGY can be a compressed format of the SEG-Y data such that the ZGY format demands less storage space, where ZGY format data may be readily exchangeable. As an example, a compressed brick may be 4x4x4 and may be referred to as a micro-brick (e.g., where a 64x64x64 brick may be referred to as a macro-brick).

As an example, a method may provide for decoupling brick size for compression and the brick size for random access in a particular format (e.g., consider the OPENZGY (or OPEN ZGY) format (see, e.g., Open Subsurface Data Universe (OSDU) group of open-source projects, which includes an OPENZGY software development toolkit (SDK)). As an example, a random-access macro-brick size may be set by default, for example, to 64x64x64 samples; noting that one or more other sizes may be specified and/or utilized. As an example, a compression brick size may be smaller such as, for example, 4x4x4 samples. As an example, a full 3D seismic volume may be, by default, partitioned into a set of 64x64x64 sample sub-cubes (bricks or macro-bricks), which in turn is partitioned into a set of 4x4x4 sample bricks (e.g., micro-bricks). In such an example, micro-bricks may be compressed individually and independently of each other, whether in series and/or in parallel.

As explained, a file may include a header or headers. For example, the SEG-Y format may include 240-byte trace identification header values. For example, byte numbers 37-40 provide for distance from source point to receiver group (e.g., center of the source point to center of the receiver group), byte numbers 41-44 provide for receiver group elevation, byte numbers 45-48 provide for surface elevation at source, byte numbers 49-52 provide for source depth below surface, byte numbers 61-64 provide for water depth at source, byte numbers 73-80 provide for source coordinates in X and Y (e.g., UTM easting coordinate or longitude and northing coordinate or latitude), and byte numbers 81-88 provide for group coordinates in X and Y; noting that byte numbers 89-90 may specify coordinate units (e.g., length in meters or feet, seconds of arc, decimal degrees, or degrees, minutes, and seconds (DMS). In various instances, seismic coordinates may be specified as geographic coordinates and/or grid coordinates; noting that a coordinate reference system (CRS) may be defined. As an example, one or more headers may be utilized, for example, consider a binary header, an extended textual header, and trace headers. As an example, one or more headers may include information that may facilitate one or more techniques to reduce one or more artefacts, such as, for example, one or more acquisition artefacts (e.g., footprint artefacts, etc.).

As an example, one or more of various formats may be utilized for seismic data, for example, for storage, processing, transmission, rendering, etc.

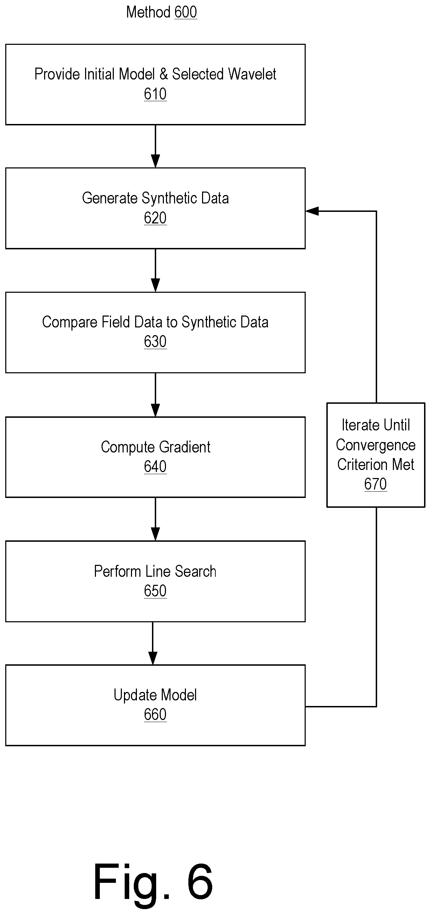

Figure 6 shows an example of a method 600 that can perform a full waveform inversion (FWI). As shown, the method 600 includes a provision block 610 for providing an initial model and a selected wavelet, a generation block 620 for generating synthetic seismic data using the model and the wavelet, a comparison block 630 for comparing the synthetic seismic data to field seismic data, a computation block 640 for computing a gradient, a performance block 650 for performing a line search, and an update block 660 for updating the model to provide an updated model, which may then be used by the generation block 620. As shown, per an iteration block 670, the method 600 can proceed in an iterative manner until one or more convergence criteria are met, which may be based on error between synthetic seismic data and field seismic data. As an example, the method 600 may be implemented by a computational framework such as, for example, the OMEGA framework.

While Figure 6 shows an example of a FWI technique, one or more other types of iterative inversion techniques include, for example, least-squares reverse time migration (LS-RTM) and image domain inversion (IDI).

As an example, one or more techniques may employ one or more wave equations. For example, a wave equation may be a formulated expression that can represent wave displacement and wave velocity (V) as functions of space (e.g., x, y, z) and time (t). As an example, a framework may employ a wave equation with angle-dependent model parameters. In such an example, the wave equation may be applied in a full waveform inversion (FWI), for example, as to a pre-stack angle gather.

FWI is a technique that can be employed for estimating geological parameters, for example, by matching observed seismic data with numerically modeled data. FWI may utilizes data discrepancies between observation and synthetic numerical simulation results to compute model updates, which may then be used to iteratively refine model parameters representing the Earth's subsurface properties.

Generally, a FWI procedure can include two main phases during each iteration: a modeling phase, where simulated data are generated, and an imaging phase, responsible for gradient computation (e.g., a model update phase). As explained, FWI may utilize a wave equation such as a conventional wave equation, which may be denoted as:

$$\mathcal{L}(P, m) = S, \tag{1}$$

where P represents the wavefield, m is the model parameter, and $S$ is the source.

As explained, FWI is an iterative technique that updates the model parameters to minimize the difference between the observed and simulated data. In FWI, a goal can be to find the model parameters that can reproduce the observed data as closely as possible through numerical simulation (e.g., generation of synthetic data using a model). In the case of a least-squares objective function, the misfit between observed and simulated data can be measured by:

$$\min_{m} J(m) = \frac{1}{2} \|P(m) - d\|_2^2, \tag{2}$$

where J is a function measuring the misfit between the simulation data and the observed data, $\|\cdot\|_2^2$ stands for the squared L2 norm.

As an example, for the conventional wave equation, the objective function can be minimized by iteratively updating the parameters with a line-search method:

$$m_{k+1} = m_k + \alpha_k g_k, \tag{3}$$

where at the k-th iteration, the model is updated with a step size $\alpha_k$ and model updating direction $g_k$.

In the foregoing approach, the model updating direction can be a descent direction based on a gradient computed to minimize the misfit function. In such an approach, $g_k$ is a function of the forward wavefield $P(m_k)$ and adjoint backpropagated wavefield $R(m_k)$:

$$g_k = F(P(m_k), \ R(m_k)). \tag{4}$$

During an FWI process, issues may arise due to acquisition geometry, which refers generally to positions of receivers and/or one or more sources during a seismic survey. For example, an acquisition footprint artefact may appear in a model that is iteratively generated during an FWI process. Such an artefact may impact convergence and/or arriving at an optimal solution.

As an example, a framework may provide for automated reduction of one or more acquisition footprint artefacts, whether applied to one or more subsurface images, one or more models, and/or one or more actions during an FWI process. In various instances, data from multiple seismic surveys may be combined, hence, artefacts may arise due to multiple acquisition geometries. As an example, a framework may reduce multiple artefacts in a single process that utilizes data from multiple seismic surveys.

As an example, a framework may provide for application of one or more techniques for reduction of one or more acquisition footprint artefacts in a manner that may provide benefits in conditioning model updates during an FWI process. Reduction of such an artefact or artefacts may improve an image or images cosmetically and help to ensure that details in an earth model are preserved for interpretation, particularly as industry continues to adopt the use of finite-difference reflectivity images that are derived directly from FWI velocity models.

An acquisition footprint artefact (e.g., or simply footprint) tends to be related to the relative sparse spatial sampling (e.g., in at least one direction) in most types of seismic data acquisition. In FWI, such an artefact appears in the FWI gradient created at each iteration, and typically manifests as a pattern that closely matches the acquisition geometry.

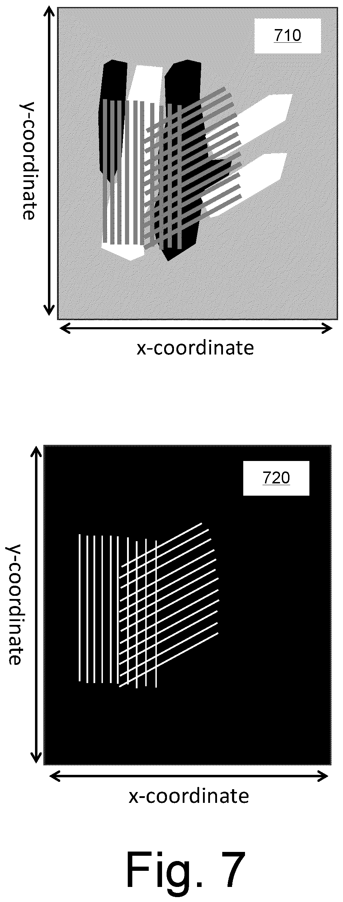

Figure 7 shows example images 710 and 720 where the image 710 is a depth slice from a 3D FWI gradient and where the image 720 is the source acquisition geometry binned on to the same sampling grid as the gradient in the image 710. In the images 710 and 720, note that the linear pattern in the image 710 matches the acquisition pattern in the image 720.

As explained, at each iteration, the FWI gradient is used to derive an update to the earth model, and thus the pattern created by the acquisition footprint can appear in the model update. In extreme cases, the presence of the footprint, as an artefact, may negatively impact the update of the model. In such instances, convergence may be compromised in that the number of iterations to reach convergence increases and/or in that convergence is not achieved. As to an increase in the number of iterations, this may be computationally costly and may also introduce additional numerical error (e.g.,

digital roundoff error, etc.).

Various techniques for footprint reduction may involve actions such as rotating a velocity grid to match an acquisition direction and then applying a notch filter in the wavenumber domain to reduce the footprint. In such an approach, where multiple surveys exist in the same FWI project, multiple passes may be required; hence, such an approach may be time consuming, with each pass potentially requiring different parameterization. Various techniques may also be applied as a post-processing action, where the footprint can accumulate in the earth model over iterations and dealt with only after a final updated model has been created.

As an example, a framework may provide for reduction of a footprint (e.g., an acquisition footprint artefact) during execution of an FWI process. For example, consider a framework that may operate to reduce a footprint (or footprints) iteratively where such iterations may be as frequent as iterations of an FWI process or, for example, less frequent yet still occurring multiple times during an FWI process. As an example, a framework may operate to apply a footprint reduction technique as a gradient preconditioner. In such an example, the technique may aim to reduce the footprint at each iteration of an FWI process before a velocity update is created (e.g., velocity update for an earth model that is or includes a velocity model).

As an example, a framework may provide for footprint reduction in an automated manner. For example, consider a framework that may provide for implementation of a screening workflow that automatically detects which type or types of acquisition or acquisitions have been used (e.g., for one or more seismic surveys). Such a workflow may aim to identify which type of footprint reduction technique or techniques may be suitably implemented. As to a subsequent workflow, a framework may provide for implementation of an automatic parameterization workflow for a footprint reduction technique or techniques, for example, based on attributes extracted from an acquisition geometry. In such an example, information as to the acquisition geometry or acquisition geometries may be accessed in a file such as, for example, an SEGY file, which may include one or more headers and/or other metadata. As explained, an SEGY file may include various indicators as to source and/or receiver positions. As an example, such information may be utilized to determine an acquisition geometry or acquisition geometries. As an example, a pattern-based approach may be utilized where a pattern may be formed using file information where an analysis of the pattern may be implemented to determine an acquisition geometry or acquisition geometries (e.g., consider automated acquisition type analysis). As an example, a framework may be automatically configured based on determination of acquisition geometry or acquisition geometries and/or type or types of seismic surveys.

As an example, a framework may provide for implementation of one or more different wavefield reconstruction techniques to reconstruct and suppress footprints. As explained, a framework may provide for extraction of parameters for reconstruction directly from an acquisition geometry that creates the footprint (e.g., acquisition footprint artefact). As an example, a framework may provide for simultaneously reconstructing a noise and a signal model, which may help to ensure preservation of geological signal while removing the footprint noise; noting that so-called footprint noise arises during an inversion where such noise does not exist in the sense of signal and noise in acquired seismic data.

As explained, a framework may provide for implementation of a workflow or workflows that may automatically reduce one or more acquisition footprint artefacts. For example, consider a framework that provides for scanning acquisition geometry for each survey in a project to identify the type or types of acquisitions used for the project. As explained, in some imaging projects data from one or more survey types may be used. Depending on the type of acquisition used, a framework may select and/or tailor a configuration for a technique or techniques that may be used for footprint reduction.

As an example, a configuration may be a combination of the type of seismic acquisition, approach to extracting parameters, and the type of footprint being targeted. For example, footprint reduction may be configured by using one or more of the following: source acquisition lines for towed streamer acquisition; receiver locations for ocean-bottom-cable surveys; source and receiver locations for "cross-spread" land or seabed acquisitions; and ocean bottom node locations for sparse node acquisition.

As an example, footprint reduction may be configured using one or more parameters that may be associated with a seismic acquisition that may be acquired with respect to depth, which may be a true vertical depth and/or a measured depth of a borehole. For example, consider a vertical seismic profile (VSP). A VSP may be a class of borehole seismic measurements used for one or more purposes, such as, for example, one or more of correlation with surface seismic data, for obtaining images of higher resolution than surface seismic images, and for looking ahead of a drill bit. While "vertical" is mentioned, a borehole may be deviated, which may include one or more lateral portions. As an example, borehole seismic surveys may utilize sources and/or receivers in a borehole. For example, consider geophones inside a borehole and a source at surface, which may be near a surface opening of the borehole. Borehole seismic surveys may vary in configuration, number and location of sources and geophones, and how they are deployed. As an example, consider a surface seismic source, which may be a vibrator on land or an air gun in offshore or marine environments. As to a VSP, it may be configured as a zero-offset VSP, offset VSP, walkaway VSP, walk-above VSP, salt-proximity VSP, shear-wave VSP, or a drill-noise or seismic-while-drilling VSP.

As an example, an acquisition footprint may exist in borehole seismic processing. For example, there can be a footprint from a VSP type acquisition, where the footprint follows the profile of a borehole. As explained, footprint removal may be configured to reduce a depth varying footprint associated with a borehole geometry, for example, as a borehole geometry in a VSP type of seismic acquisition.

While some examples of footprints and configurations are mentioned, a framework may provide for one or more other configurations, additionally or alternatively.

As an example, different types of footprints may exist. For example, consider one or more of linear footprint effects where acquisition uses predominantly linear patterns; and localized footprint effects near source/receiver locations in shallow portions of an earth model, or where data were acquired using sparse source or receiver locations. As mentioned, a footprint may vary with respect to depth such as in a borehole type of seismic survey.

As an example, a framework may provide for extraction of parameters for footprint reduction where such parameters may be extracted from information pertaining to acquisition geometry. In various instances, a seismic survey geometry may have a nominal pattern where actual geometry may have variations. As an example, a framework may tune footprint reduction to a nominal geometry while being able to adapt to variations (e.g., consider adapting to local variations).

As an example, a framework may provide one or more different mechanisms to reduce a footprint or footprints. For example, where a footprint is of a linear type, a wavenumber-based approach can be used to target and reduce the footprint, with acquisition directions extracted from data defining the wavenumbers to target. As another example, where a footprint is of a localized type, a matched-filter-based approach may be used, for example, with filter parameters extracted from a sparse source or receiver geometry.

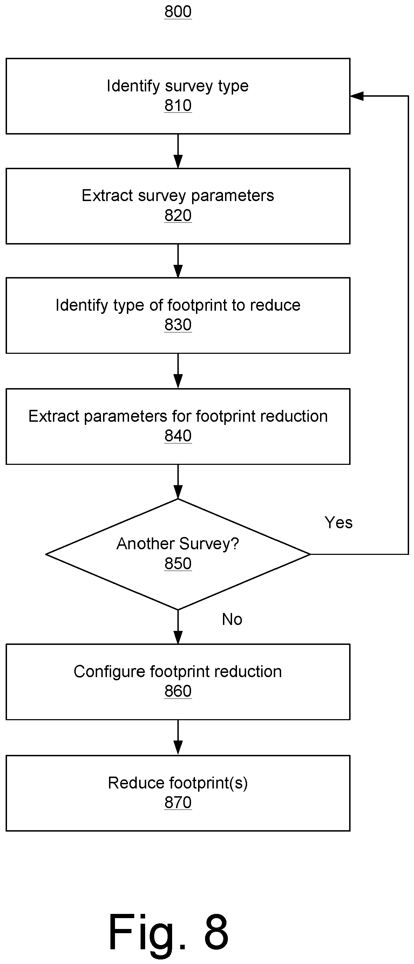

Figure 8 shows an example of a method 800 that includes an identification block 810 for identifying survey type, an extraction block 820 for extracting survey parameters, an identification block 830 for identifying type of footprint to reduce, an extraction block 840 for extracting parameters for the type of footprint for footprint reduction, a decision block 850 for deciding whether another survey exists (e.g., in a project), a configuration block 860 for configuring footprint reduction, and a reduction block 870 for reducing one or more footprints.

As an example, consider a narrow azimuth acquisition for a seismic survey. In such an example, a method may include scanning an entire acquisition geometry, to identify the type of acquisition, how the footprint reduction should be parameterized, and which footprint reduction technique is suitable for use.

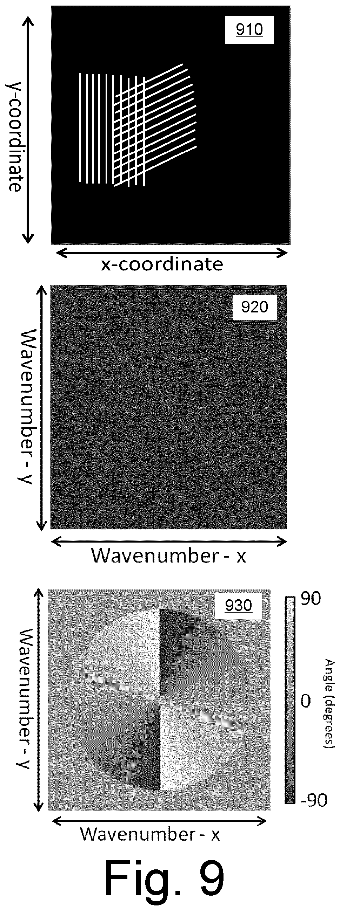

Figure 9 shows example plots 910, 920, and 930 as to source acquisition geometry where the plot 910 shows source acquisition geometry. As an example, a 2D Fourier transform of the source acquisition geometry may be utilized to decompose the geometry into its dominant directions, as shown in the plot 920 where, for example, the plot 930 shows how the wavenumbers map to a direction (angle).

As an example, an FFT may be stacked along lines of constant angle, to provide an estimate of the directions in a survey area. As an example, if there are a sparse number of directions, then this may indicate that a survey has been acquired in a linear pattern, and a footprint reduction technique targeting sparse directions (e.g., such as a wavenumber-based technique) may be implemented.

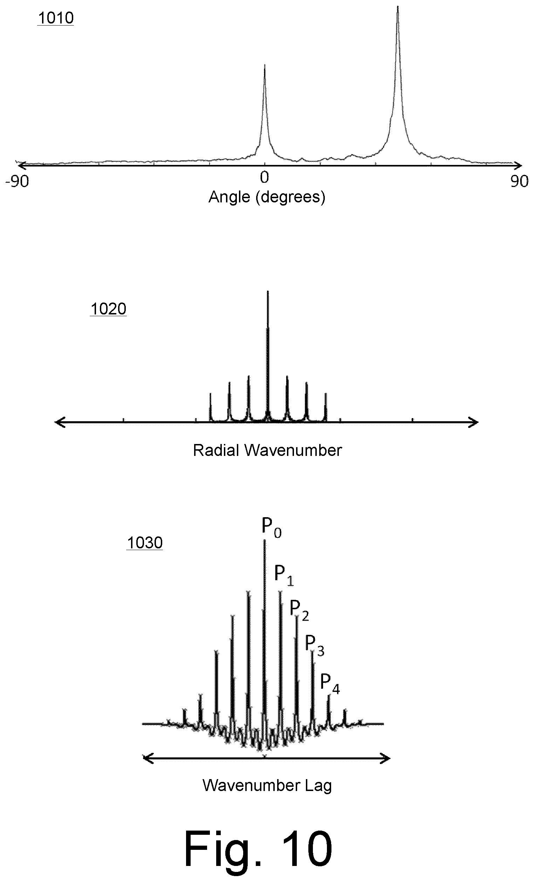

Figure 10 shows example plots 1010, 1020, and 1030 as to the angle spectrum of the source acquisition geometry of the plot 910 of Figure 9 where two clear directions are identified (see, e.g., peaks for the two angles in the plot 1010). In Figure 10, the plot 1010 shows the stack of the plot 1020 along lines of constant angle as indicated in the plot 1030. Specifically, the plot 1020 shows the radial wavenumber spectra extracted along 0 degrees while the plot 1030 shows the autocorrelation of the radial wavenumber spectra of the plot 1020.

As an example, a framework may additionally use an autocorrelation-based approach to look at the periodicity of a 2D FFT along each of directions, which may indicate the mean crossline spacing between acquisition lines that were acquired in each direction. As shown in the plot 1020, the wavenumber spectrum may be extracted along the 0-degree direction as identified in the plot 1010. And, as shown in the plot 1030, a framework may implement an autocorrelation technique. As an example, by detecting peaks (e.g., $P_0$, $P_1$, $P_2$ and so on) and computing mean spacing between peaks, the periodicity in the radial wavenumber axes may be estimated, where the periodicity corresponds to the mean spacing between the acquisition lines. Thus, by analyzing the geometry, a framework may automatically detect the type of acquisition, direction of acquisition and the sailing line spacing.

As an example, to parameterize footprint reduction, a framework may then perform a more local analysis of the acquisition geometry. In the example of Figure 10, a towed streamer acquisition is identified where, for example, a local analysis of the source geometry may be performed to extract acquisition directions. For example, consider a framework that may provide for specifying a window size, which may utilize a multiple of a sail line spacing as extracted by the framework (e.g., consider a value of twice the sail line spacing, four times the sail line spacing, etc.).

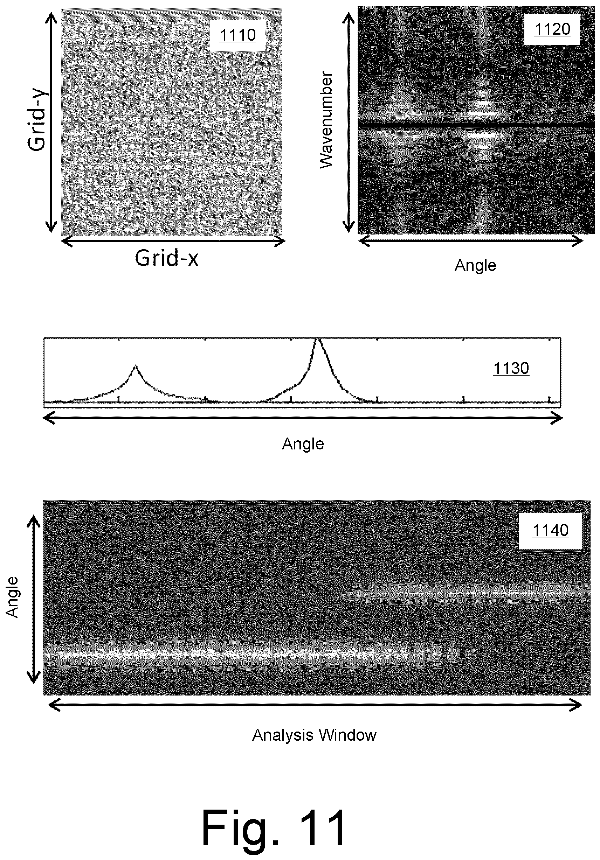

Figure 11 shows example plots 1110, 1120, 1130, and 1140 where the plot 1110 is a local window extracted from a gridded shot geometry, the plot 1120 is the decomposition of the plot 1110 into angle and wavenumber, the plot 1130 is a stack of all wavenumbers in the plot 1120, and the plot 1140 is the angle stacks for all local analysis windows.

As shown in Figure 11, the plot 1110 corresponds to a local window, which may correspond to source locations binned on the same sampling grid as used to create the data from which the footing is to be reduced therefrom. As an example, a window of a geometry may then be decomposed into angle and wavenumber as indicated in the plot 1120 where a number of dominant directions may be identified (e.g., two dominant directions). As explained, the plot 1130 shows the stack (sum) of the plot 1120 along the wavenumber axes, which provides for identification of a range of angles that may be targeted in the window of data to reduce a footprint. As an example, a local window may be applied to an entire model (e.g., in a horizontal plane), such as, for example, as a sliding window through an entire model, to create an estimate of the local angles across the entire model. The plot 1140 shows how such an approach may capture variation in acquisition geometry. For example, in the plot 1140, two angles are indicated where an overlap exists within the analysis window for the two angles. In such an approach, a result or results may be utilized for purposes of quality control. For example, the plot 1140 may confirm that the data of a project stems from two different seismic surveys where each of the two different seismic surveys has a different relevant angle.

As an example, a framework may reduce a footprint from a corresponding window of a depth slice of seismic data by decomposing that data into the kx-ky domain (e.g., wavenumber domain) and then isolating and removing the footprint artefacts corresponding to the identified footprint directions. For example, consider a framework that may implement a matching pursuit reconstruction approach, where wavenumbers corresponding to the footprint are reconstructed and added to a noise output, and all other wavenumbers are reconstructed and added to a signal output.

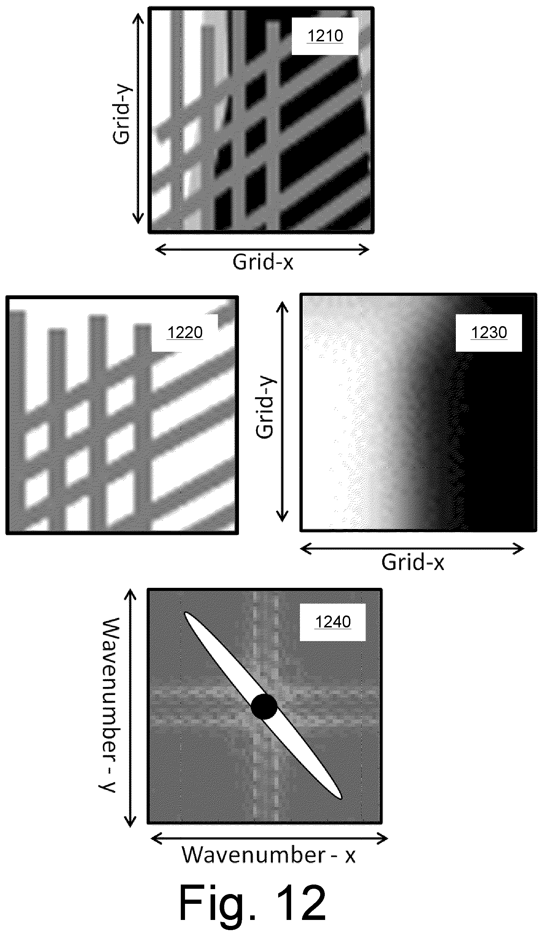

Figure 12 shows example plots 1210, 1220, 1230, and 1240 where the plot 1210 shows a local window of a depth slice of an FWI gradient, the plot 1220 shows a footprint estimated from the data in the plot 1210, the plot 1230 shows signal estimated from the data in the plot 1210, and the plot 1240 shows a schematic representation of the relationship between the identified footprint wavenumbers (oval) and low-wavenumber signal to be protected (circle).

In various instances, a footprint tends to be a higher wavenumber phenomenon where it is possible to help protect lower wavenumber signals in data, for example, by setting a lower wavenumber limit for footprint reduction. As an example, a lower wavenumber limit may be based on a sail line spacing (e.g., 1/(2*sail-line spacing)), which may help to ensure preservation of low wavenumber geological signal. Such an approach allows a non-footprint wavenumber signal reconstruction to be performed simultaneously with the estimate of the footprint, preventing signal components from leaking into the footprint estimate. In Figure 12, the plot 1230 shows the signal model extracted at the same time as the footprint model in the plot 1220 where the plot 1240 shows signal protection, for example, by mapping of the footprint into the kx-ky domain. As mentioned, the region indicated by the oval shows the range of wavenumbers corresponding to the footprint. If a framework targets all of those wavenumbers, there is a risk of damaging low-wavenumber signal components that occur within the circle. Hence, a framework may provide for protecting low wavenumber signal components, for example, by excluding that circle and all wavenumbers outside of the footprint region. In such an approach, a framework may limit signal leakage into the footprint.

As an example, a framework may provide for windowing input data, extracting local directions for each window, and using those extracted local directions to parameterize the reduction of a footprint corresponding to that window. In such an example, parameterization may then vary automatically across an area as acquisition geometry changes, for example, without user intervention (e.g., without a human-in-the-loop (HITL)).

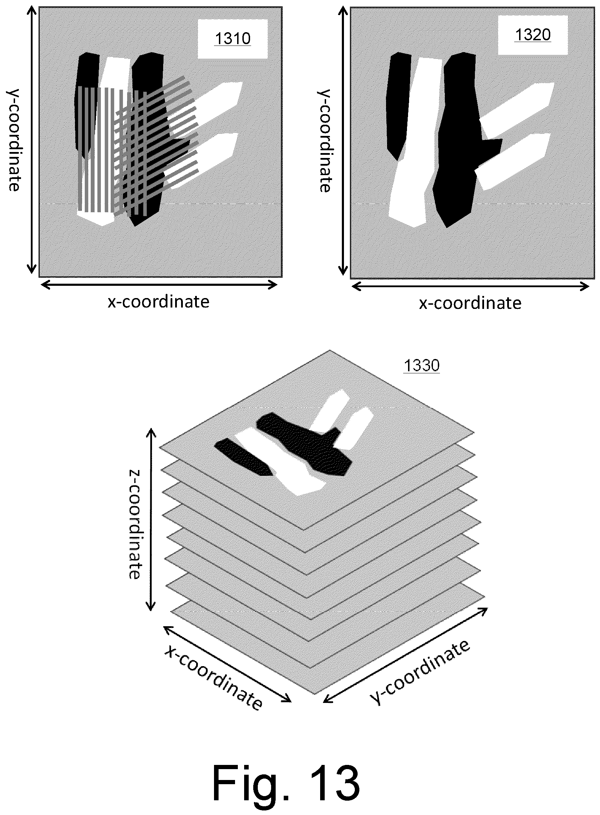

Figure 13 shows example plots 1310, 1320, and 1330. As shown, the plot 1310 shows a depth slice from an FWI gradient, the plot 1320 shows the depth slice in the plot 1310 after reduction of the footprint estimate, and the plot 1330 shows a number of depth slices that may make up a seismic volume to be cleaned. In Figure 13, the plots 1310 and 1320, which may be images, show an example of the input and output of a framework implemented footprint reduction workflow for a single depth slice. As indicated in the plot 1330, such a workflow may be repeated for each depth in the volume, allowing the footprint to be reduced from the entire volume.

In the example of Figure 13, two survey directions were identified. As parameters relating to the directions may be automatically extracted, a workflow may be used for a larger number of survey directions. As an example, parameters may be extracted from source geometry and/or from receiver geometry. For example, consider instances where footprint may be associated with both source and receiver geometry, where such geometries may be analyzed independently, with the associated directions then being combined to reconstruct the footprint. As an example, if a survey type is also present which will introduce localized footprint effects, then different footprint removal approaches (e.g., 2D matched filter approach, etc.) may optionally be cascaded to target multiple types.

As explained, a framework may identify whether a survey geometry consists of sparse directions where, for example, if the survey geometry does not consist of sparse directions (e.g., if there are 10 or more directions identified), then one or more additional tests may be used to identify other types of surveys. For example, one such geometry may be gridded geometry.

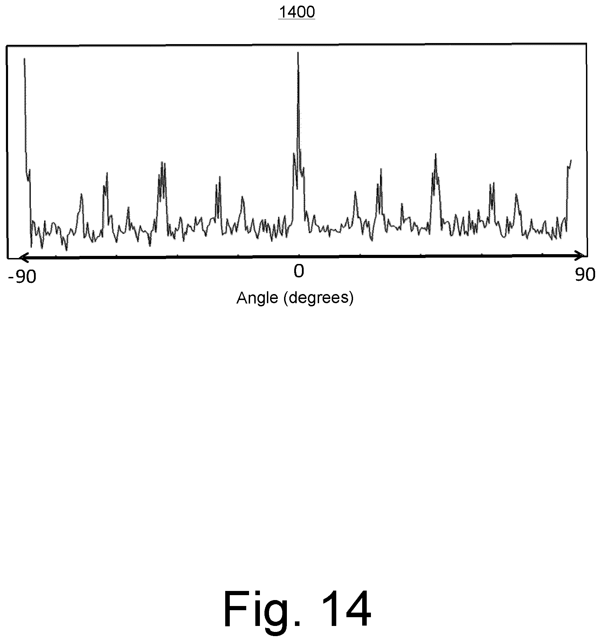

Figure 14 shows an example plot 1400, noting that a 2D FFT of a grid is also a grid such that a set of directions identified may be symmetrical around one of the grid axes, as shown in the plot 1400. In particular, the plot 1400 shows an angle stack for a gridded geometry with no set of sparse acquisition directions. As an example, a gridded acquisition geometry may be identified based on the symmetry of such a plot around either of the cartesian axes (e.g., 0 degrees, or +/-90 degrees).

As an example, a measure of symmetry may be used to determine if a non-sparse geometry corresponds to a gridded one. As an example, another non-sparse type of geometry may be a coil survey, where rather than acquiring data along lines or grids, data are acquired along curved paths. As an example, a different type of transform may be used to detect this type of survey (e.g., consider a transform based on curvilinear coordinates). In such an approach, a set of classes may be created based on various attributes, to identify a range of different types of seismic surveys, which, in turn, may possibly demand application of one or more of different types of footprint reduction techniques.

As an example, when reconstructing the footprint, it may not necessarily be required to do so for every depth in seismic data. For example, a footprint artefact may vary slowly with depth. As an example, a framework may provide for reconstructing a footprint for a decimated range of depths, and then interpolate across those depths before reducing the footprint from a full volume (e.g., or a relevant portion thereof). As an example, a framework may include features for one or more types of pre-processing along the depth axes, such as, for example, smoothing and/or low pass filtering to ensure continuity in depth.

As an example, a framework, when extracting a footprint, may provide for measuring RMS amplitude of the extracted footprint. As an example, a framework may provide for measuring the amplitude of neighboring non-footprint (signal) wavenumbers. In such an example, this may allow for a signal-to-noise ratio to be measured. In such an example, if this ratio is above a certain threshold (e.g., if the local signal is stronger than the footprint), the ratio may provide an indication of risk of leaking signal into a footprint estimate. As an example, such a ratio may be utilized to eliminate or weight down part of a footprint. In such an example, a framework may automatically identify where there is significant footprint to be removed, and where there is not significant footprint to be removed (e.g., according to one or more criteria, etc.).

As an example, a framework may provide for footprint reduction on a volume-by-volume basis, for example, one volume at a time (e.g., a volume of a project). As an example, a framework may be implemented at one or more times along a workflow. For example, consider an approach that implements footprint reduction at the end of an FWI process; noting that when implemented during an FWI process (e.g., during processing of the gradient at each iteration), benefit may inure as to quality of the FWI process (e.g., improved convergence, less computational resources, less time, etc.).

While various examples are described in the context of FWI, one or more acquisition footprint artefacts may be can be present in one or more other types of seismic volumes, such as time or depth migrated volumes, where a framework may be suitably applied.

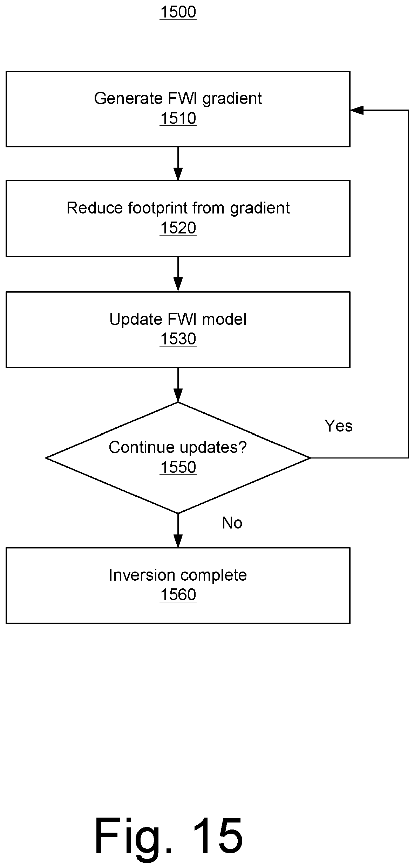

Figure 15 shows an example of a method 1500, which may correspond to the reduction block 870 of the method 800 of Figure 8. As shown, the method 1500 may include a generation block 1510 for generating an FWI gradient, a reduction block 1520 for reducing the footprint from the gradient, an update block 1530 for updating an FWI model (e.g., an earth model, a velocity model, etc.), a decision block 1550 for deciding whether to continue updates (e.g., continue with one or more further iterations), and a completion block 1560 for completing the inversion once the decision block 1550 indicates that no further updates are to be performed (e.g., convergence has been achieve according to one or more convergence criteria). As shown, where the decision block 1550 determines that updating is to continue, the method 1500 may return to the generation block 1510.

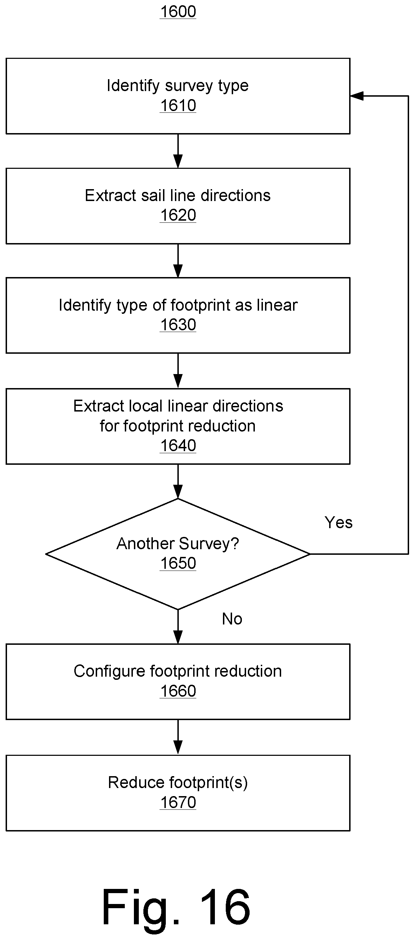

Figure 16 shows an example of a method 1600 that may provide for identifying an ocean streamer type of survey. As shown, the method 1600 may include an identification block 1610 for identifying survey type, an extraction block 1620 for extracting sail line directions as survey parameters, an identification block 1630 for identifying a type of footprint to reduce as being linear (e.g., linear sail lines), an extraction block 1640 for extracting local linear directions as parameters for the type of footprint for footprint reduction, a decision block 1650 for deciding whether another survey exists (e.g., in a project), a configuration block 1660 for configuring footprint reduction, and a reduction block 1670 for reducing one or more footprints. As an example, the decision block 1650 may indicate another survey such that the method 1600 continues at the identification block 1610, which may identify the same or a different survey type. If a different type of survey is identified, the blocks 1620, 1630, and 1640 may be swapped for the more general blocks 820, 830, and 840 and/or one or more other blocks, as appropriate for the different type of survey.

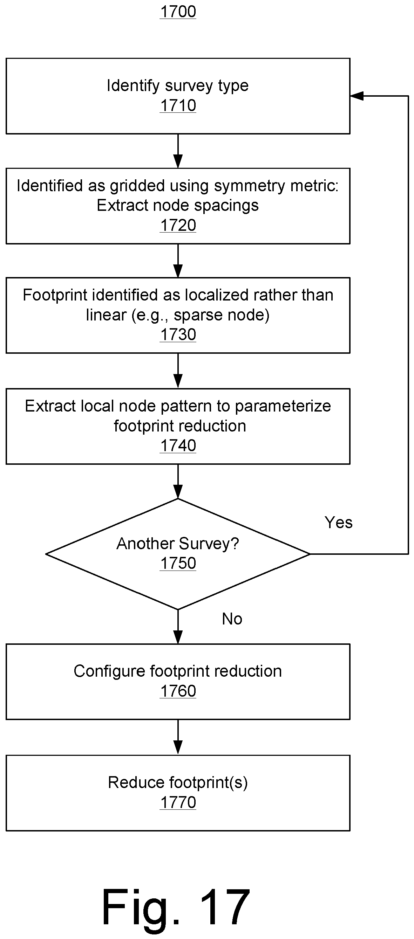

Figure 17 shows an example of a method 1700 that may provide for identifying a gridded type of survey. As shown, the method 1700 may include an identification block 1710 for identifying survey type where the survey type is identified as gridded using a symmetry metric (see, e.g., the plot 1400 of Figure 14), an extraction block 1720 for extracting node spacings as survey parameters of the gridded type of survey, an identification block 1730 for identifying a type of footprint to reduce as being localized rather than linear (e.g., sparse nodes), an extraction block 1740 for extracting a local node pattern as parameters for the type of footprint for footprint reduction, a decision block 1750 for deciding whether another survey exists (e.g., in a project), a configuration block 1760 for configuring footprint reduction, and a reduction block 1770 for reducing one or more footprints. As an example, the decision block 1750 may indicate another survey such that the method 1700 continues at the identification block 1710, which may identify the same or a different survey type. If a different type of survey is identified, the blocks 1720, 1730, and 1740 may be swapped for the more general blocks 820, 830, and 840 and/or one or more other blocks, as appropriate for the different type of survey.

As an example, for different survey types, a framework may implement an approach that may rather than targeting linear trends, may match a sparse-OBN pattern to data. As an example, for coil acquisition, where a vessel is always turning (e.g., an arced path), a framework may provide for targeting curved events rather than linear. As an example, in the methods 800, 1600 and/or 1700, the configuration blocks 860, 1660 and/or 1760 and/or the reduction blocks 870, 1670 and/or 1770, may provide for handling situations where there may be two or more survey types in the same imaging project (e.g., an OBN/OBC and towed streamer dataset). As explained, in 4D seismic, data may be acquired for a region at two particular points in time (e.g., before production of a resource from a reservoir and after some amount of production of the resource from the reservoir). In such an example, the types of surveys may differ, with respect to type and/or acquisition geometry. As an example, a framework may provide for handling a 4D seismic project where, for example, data from multiple points in time may be processed together (e.g., using FWI, etc.).

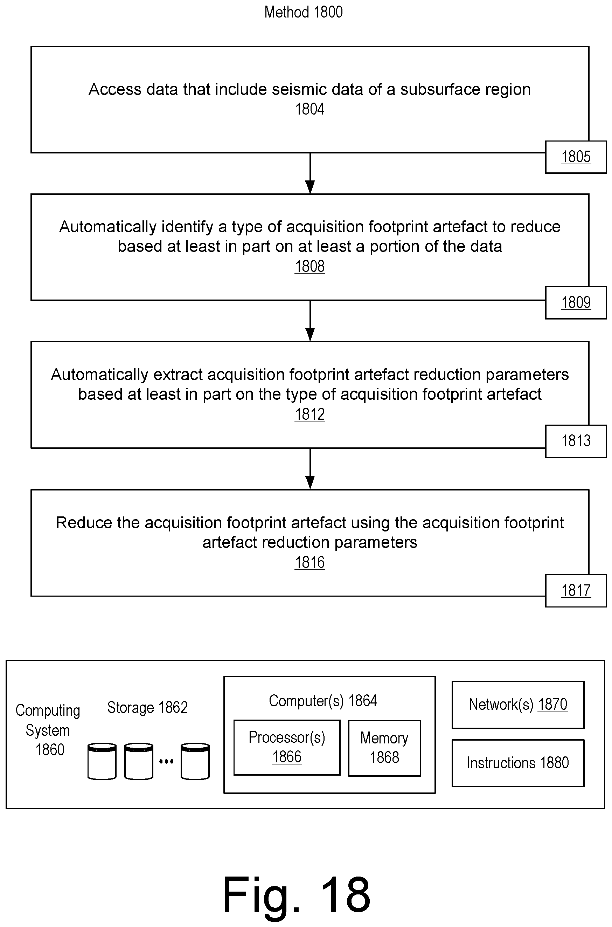

Figure 18 shows an example of a method 1800 and an example of a computing system 1860. As shown, the method 1800 may include an access block 1804 for accessing data that include seismic data of a subsurface region; an identification block 1808 for automatically identifying a type of acquisition footprint artefact to reduce based at least in part on at least a portion of the data; an extraction block 1812 for automatically extracting acquisition footprint artefact reduction parameters based at least in part on the type of acquisition footprint artefact; and a reduction block 1816 for reducing the acquisition footprint artefact using the acquisition footprint artefact reduction parameters.

The method 1800 is shown in Figure 18 in association with various computer-readable media (CRM) blocks 1805, 1809, 1813 and 1817. Such blocks generally include instructions suitable for execution by one or more processors (or cores) to instruct a computing device or system to perform one or more actions. While various blocks are shown, a single medium may be configured with instructions to allow for, at least in part, performance of various actions of the method 1800 (e.g., using the computing system 1860, etc.). A computer-readable medium (CRM) may be a computer-readable storage medium that is not a carrier wave, that is not a signal and that is non-transitory.

Figure 18 shows the computing system 1860 as including one or more information storage devices 1862, one or more computers 1864, one or more network interfaces 1870 and instructions 11880. As to the one or more computers 1864, each computer may include one or more processors (or processing cores) 1866 and memory 1868 for storing instructions executable by at least one of the one or more processors. A computer may include one or more network interfaces (wired or wireless), one or more graphics cards, a display interface (wired or wireless), etc. A system may include one or more display devices (optionally as part of a computing device, etc.). Memory can be a computer-readable storage medium. A computer-readable storage medium includes, but is not limited to, a carrier wave, a signal, and a non-transitory medium.

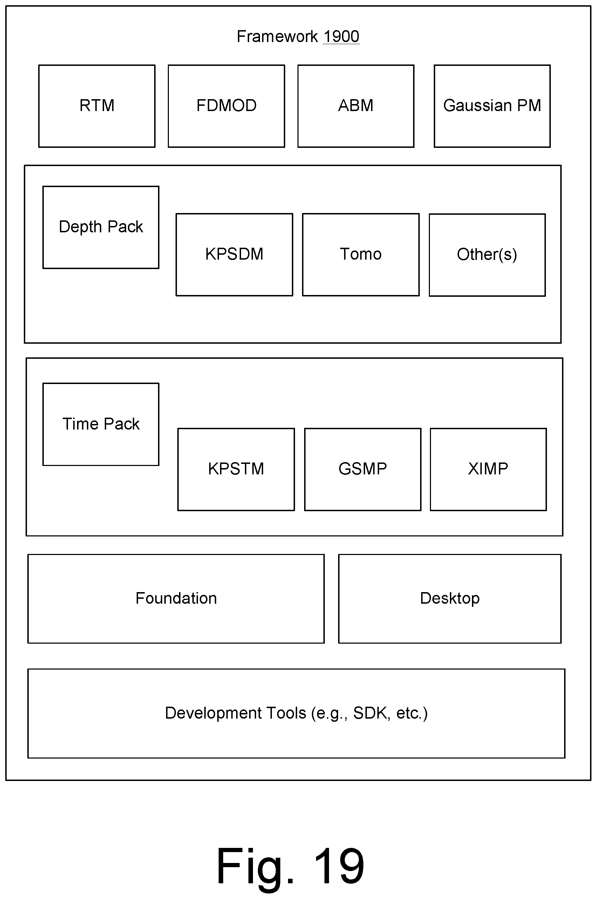

Figure 19 shows an example of a computational framework 1900 that can include one or more processors and memory, as well as, for example, one or more interfaces. The blocks of the computational framework 1900 may be provided as instructions such as the instructions 1880 of the system 1860 of Figure 18, etc. The computational framework of Figure 19 can include one or more features of the OMEGA framework, which includes finite difference modelling (FDMOD) features for two-way wavefield extrapolation modelling, generating synthetic shot gathers with and without multiples. The FDMOD features can generate synthetic shot gathers by using full 3D, two-way wavefield extrapolation modelling, which can utilize wavefield extrapolation logic matches that are used by reverse-time migration (RTM). A model may be specified on a dense 3D grid as velocity and optionally as anisotropy, dip, and variable density.

As shown in Figure 19, the computational framework 1900 includes features for RTM, FDMOD, adaptive beam migration (ABM), Gaussian packet migration (Gaussian PM), depth processing (e.g., Kirchhoff prestack depth migration (KPSDM), tomography (Tomo)), time processing (e.g., Kirchhoff prestack time migration (KPSTM), general surface multiple prediction (GSMP), extended interbed multiple prediction (XIMP)), framework foundation features, desktop features (e.g., GUIs, etc.), and development tools.

The framework 1900 can include features for geophysics data processing. The framework 1900 can allow for processing various types of data such as, for example, one or more of: land, marine, and transition zone data; time and depth data; 2D, 3D, and 4D surveys; isotropic and anisotropic (TTI and VTI) velocity fields; and multicomponent data.

The framework 1900 can allow for transforming seismic, electromagnetic, microseismic, and/or vertical seismic profile (VSP) data into actionable information, for example, to perform one or more actions in the field for purposes of resource production, etc. The framework 1900 can extend workflows into reservoir characterization and earth modelling. For example, the framework 1900 can extend geophysics data processing into reservoir modelling by integrating with the PETREL framework via the Earth Model Building (EMB) tools, which enable a variety of depth imaging workflows, including model building, editing and updating, depth-tomography QC, residual moveout analysis, and volumetric common-image-point (CIP) pick QC. Such functionalities, in conjunction with depth tomography and migration algorithms of the framework 1900 can produce accurate and precise images of the subsurface. The framework 1900 may provide support for field to final imaging, to prestack seismic interpretation and quantitative interpretation, from exploration to development.

As an example, the FDMOD component can be instantiated via one or more CPUs and/or one or more GPUs for one or more purposes. For example, consider utilizing the FDMOD for generating synthetic shot gathers by using full 3D, two-way wavefield extrapolation modelling, the same wavefield extrapolation logic matches that are used by RTM. FDMOD can model various aspects and effects of wave propagation. The output from FDMOD can be or include synthetic shot gathers including direct arrivals, primaries, surface multiples, and interbed multiples. The model can be specified on a dense 3D grid as velocity and optionally as anisotropy, dip, and variable density. As an example, survey designs can be modelled to ensure quality of a seismic survey, which may account for structural complexity of the model. Such an approach can enable evaluation of how well a target zone will be illuminated. Such an approach may be part of a quality control process (e.g., task) as part of a seismic workflow. As an example, a FDMOD approach may be specified as to size, which may be model size (e.g., a grid cell model size). Such a parameter can be utilized in determining resources to be allocated to perform a FDMOD related processing task. For example, a relationship between model size and CPUs, GPUs, etc., may be established for purposes of generating results in a desired amount of time, which may be part of a plan (e.g., a schedule) for a seismic interpretation workflow.

As an example, as survey data become available, interpretation tasks may be performed for building, adjusting, etc., one or more models of a geologic environment. For example, consider a vessel that transmits a portion of acquired data while at sea and that transmits a portion of acquired data while in port, which may include physically offloading one or more storage devices and transporting such one or more storage devices to an onshore site that includes equipment operatively coupled to one or more networks (e.g., cable, etc.). As data are available, options exist for tasks to be performed.

As an example, the framework 1900 can include one or more sets of instructions executable to perform one or more methods such as, for example, the method 800, the method 1500, the method 1600, the method 1700, the method 1800, etc.

As an example, a method can include accessing data that include seismic data of a subsurface region; automatically identifying a type of acquisition footprint artefact to reduce based at least in part on at least a portion of the data; automatically extracting acquisition footprint artefact reduction parameters based at least in part on the type of acquisition footprint artefact; and reducing the acquisition footprint artefact using the acquisition footprint artefact reduction parameters.

As an example, a type of acquisition footprint artefact may be or include a linear type. For example, consider a linear type that may correspond to a marine streamer survey that utilizes sail lines. As an example, a type of acquisition footprint artefact may be or include a non-linear type. For example, consider a non-linear type that may correspond to a marine streamer survey that utilizes curves.

As an example, a type of acquisition footprint artefact may be or include a sparse type. For example, a sparse type may correspond to an ocean-bottom node survey.

As an example, a type of acquisition footprint artefact may be or include a borehole geometry type (e.g., consider data that may include data of a seismic borehole type of survey, etc.). In such an example, the artefact may depend on depth.

As an example, a method may include reducing an acquisition footprint artefact by in a manner that includes altering a gradient of a full waveform inversion. In such an example, the altering may occur iteratively during the full waveform inversion. As an example, altering may occur iteratively during a full waveform inversion for each iteration of the full waveform inversion or, for example, on a basis that may be less than for each iteration.

As an example, a method may include automatically extracting acquisition footprint artefact reduction parameters in a manner that includes determining one or more angles using wavenumbers.

As an example, a method may include automatically extracting acquisition footprint artefact reduction parameters in a manner that includes determining one or more spacings using wavenumbers.

As an example, a method may include automatically extracting acquisition footprint artefact reduction parameters in a manner that includes determining a local window size.

As an example, a method may include automatically extracting acquisition footprint artefact reduction parameters in a manner that includes determining a low-wavenumber limit for preserving signal in a seismic data.

As an example, seismic data of a subsurface region may include seismic data from multiple seismic surveys. In such an example, a method may include automatically identifying different types of acquisition footprint artefacts to reduce based at least in part on at least a portion of data and automatically extracting acquisition footprint artefact reduction parameters based at least in part on the different types of acquisition footprint artefacts. In such an example, a method may include reducing the different types of acquisition footprint artefacts using the acquisition footprint artefact reduction parameters.

As an example, a method may include reducing an acquisition footprint artefact using acquisition footprint artefact reduction parameters in a manner that occurs during execution of an iterative full waveform inversion to improve performance of the iterative full waveform inversion. For example, consider an improvement in convergence where such a technique for artefact reduction can result in performing fewer iterations to reach one or more convergence criteria (e.g., error criteria, etc.). By performing fewer iterations, a result may include less digital roundoff error and/or may be generated in lesser and/or using fewer computational resources. As explained, a result may be improved as to exhibiting less of an acquisition footprint artefact, which may provide for improved identification of one or more subsurface structures and/or presence of fluid or fluids (e.g., water, gas, hydrocarbons, etc.).

As an example, a system can include a processor; memory operatively coupled to the processor; and processor-executable instructions stored in the memory to instruct the system to: access data that include seismic data of a subsurface region; automatically identify a type of acquisition footprint artefact to reduce based at least in part on at least a portion of the data; automatically extract acquisition footprint artefact reduction parameters based at least in part on the type of acquisition footprint artefact; and reduce the acquisition footprint artefact using the acquisition footprint artefact reduction parameters.

As an example, one or more computer-readable storage media can include computer-executable instructions executable to instruct a computing system to: access data that include seismic data of a subsurface region; automatically identify a type of acquisition footprint artefact to reduce based at least in part on at least a portion of the data; automatically extract acquisition footprint artefact reduction parameters based at least in part on the type of acquisition footprint artefact; and reduce the acquisition footprint artefact using the acquisition footprint artefact reduction parameters.

As an example, a computer program product can include computer-executable instructions to instruct a computing system to perform a method, for example, consider a method such as the method 1800 of Figure 18, etc.

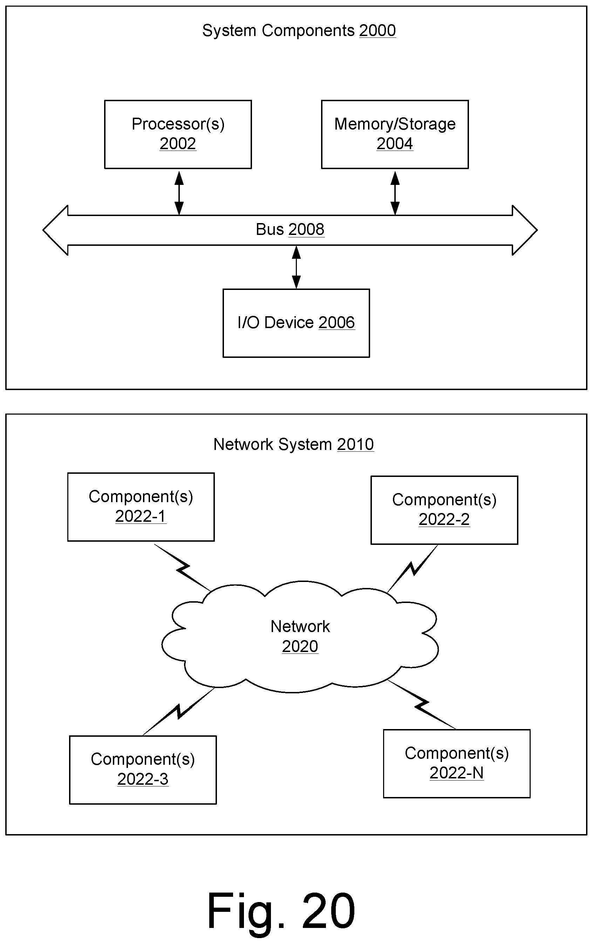

Figure 20 shows components of a computing system 2000 and a networked system 2010 that includes a network 2020. The system 2000 includes one or more processors 2002, memory and/or storage components 2004, one or more input and/or output devices 2006 and a bus 2008. Instructions may be stored in one or more computer-readable media (memory/storage components 2004). Such instructions may be read by one or more processors (see the processor(s) 2002) via a communication bus (see the bus 2008), which may be wired or wireless. The one or more processors may execute such instructions to implement (wholly or in part) one or more attributes (as part of a method). A user may view output from and interact with a process via an I/O device (see the device 2006). A computer-readable medium may be a storage component such as a physical memory storage device such as a chip, a chip on a package, a memory card, etc. (a computer-readable storage medium).

Components may be distributed, such as in the network system 2010. The network system 2010 includes components 2022-1, 2022-2, 2022-3, . . . 2022-N. The components 2022-1 may include the processor(s) 2002 while the component(s) 2022-3 may include memory accessible by the processor(s) 2002. Further, the component(s) 2022-2 may include an I/O device for display and optionally interaction with a method. The network may be or include the Internet, an intranet, a cellular network, a satellite network, etc.

A device may be a mobile device that includes one or more network interfaces for communication of information. A mobile device may include a wireless network interface (operable via IEEE 802.11, ETSI GSM, BLUETOOTH®, satellite, etc.). A mobile device may include components such as a main processor, memory, a display, display graphics circuitry (optionally including touch and gesture circuitry), a SIM slot, audio/video circuitry, motion processing circuitry (accelerometer, gyroscope), wireless LAN circuitry, smart card circuitry, transmitter circuitry, GPS circuitry, and a battery. A mobile device may be configured as a cell phone, a tablet, etc. A method may be implemented (wholly or in part) using a mobile device. A system may include one or more mobile devices.

A system may be a distributed environment such as a so-called "cloud" environment where various devices, components, etc. interact for purposes of data storage, communications, computing, etc. A device or a system may include one or more components for communication of information via one or more of the Internet (where communication occurs via one or more Internet protocols), a cellular network, a satellite network, etc. A method may be implemented in a distributed environment (wholly or in part as a cloud-based service).

Information may be input from a display (consider a touchscreen), output to a display or both. Information may be output to a projector, a laser device, a printer, etc. such that the information may be viewed. Information may be output stereographically or holographically. As to a printer, consider a 2D or a 3D printer. A 3D printer may include one or more substances that can be output to construct a 3D object. Data may be provided to a 3D printer to construct a 3D representation of a subterranean formation. Layers may be constructed in 3D (horizons, etc.), geobodies constructed in 3D, etc. Holes, fractures, etc., may be constructed in 3D (as positive structures, as negative structures, etc.).

Although only a few example embodiments have been described in detail above, those skilled in the art will readily appreciate that many modifications are possible in the example embodiments. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

**1.** A method comprising:

accessing data that include seismic data of a subsurface region;

automatically identifying a type of acquisition footprint artefact to reduce based at least in part on at least a portion of the data;

automatically extracting acquisition footprint artefact reduction parameters based at least in part on the type of acquisition footprint artefact; and

reducing the acquisition footprint artefact using the acquisition footprint artefact reduction parameters.

2. The method of claim 1, wherein the type of acquisition footprint artefact includes a linear type, a non-linear type and/or a sparse type.

3. The method of claim 2, wherein the linear type corresponds to a marine streamer survey that utilizes sail lines.

4. The method of claim 2 or 3, wherein the non-linear type corresponds to a marine streamer survey that utilizes curves.

5. The method of claim 2, 3 or 4, wherein the sparse type corresponds to an ocean-bottom node survey.

6. The method of any one of the preceding claims, wherein the reducing includes altering a gradient of a full waveform inversion.

7. The method of claim 6, wherein the altering occurs iteratively during the full waveform inversion.

8. The method of claim 7, wherein the altering occurs iteratively during the full waveform inversion for each iteration of the full waveform inversion.

9. The method of any one of the preceding claims, wherein the automatically extracting acquisition footprint artefact reduction parameters includes determining one or more angles using wavenumbers, one or more spacings using wavenumbers, a local window size and/or a low-wavenumber limit for preserving signal in the seismic data.

10. The method of any one of the preceding claims, wherein the seismic data of the subsurface region include seismic data from multiple seismic surveys.

11. The method of claim 10, comprising automatically identifying different types of acquisition footprint artefacts to reduce based at least in part on at least a portion of the data and automatically extracting acquisition footprint artefact reduction parameters based at least in part on the different types of acquisition footprint artefacts.

12. The method of claim 11, comprising reducing the different types of acquisition footprint artefacts using the acquisition footprint artefact reduction parameters.

13. The method of any one of the preceding claims, wherein the reducing the acquisition footprint artefact using the acquisition footprint artefact reduction parameters occurs during execution of an iterative full waveform inversion to improve performance of the iterative full waveform inversion.

14. A system comprising:

a processor;

memory operatively coupled to the processor; and

processor-executable instructions stored in the memory to instruct the system to perform a method according to any one of the preceding claims.

15. One or more computer-readable storage media including computer-executable instructions executable to instruct a computing system to perform a method according to any one of the claims 1 - 13.

Geologic Environment 100

Fig. 1

# Fig. 2

# Fig. 3

Fig. 4

Fig. 5

Method <u>600</u>

```
┌──────────────────────────────────────┐
│  Provide Initial Model & Selected Wavelet │
│                  610                   │
└──────────────────────────────────────┘
                    │
                    ▼
┌──────────────────────────────────────┐
│         Generate Synthetic Data        │◄─────┐
│                  620                   │      │
└──────────────────────────────────────┘      │
                    │                          │
                    ▼                          │
┌──────────────────────────────────────┐      │
│     Compare Field Data to Synthetic Data │   │
│                  630                   │      │
└──────────────────────────────────────┘      │
                    │            ┌─────────────────────┐
                    ▼            │   Iterate Until     │
┌──────────────────────────────────────┐  │  Convergence   │
│            Compute Gradient            │  │  Criterion Met │
│                  640                   │  │      670       │
└──────────────────────────────────────┘  └─────────────────────┘
                    │                          ▲
                    ▼                          │
┌──────────────────────────────────────┐      │
│           Perform Line Search          │      │
│                  650                   │      │
└──────────────────────────────────────┘      │
                    │                          │
                    ▼                          │
┌──────────────────────────────────────┐      │
│             Update Model               │──────┘
│                  660                   │
└──────────────────────────────────────┘
```

# Fig. 6

Fig. 7

800

```
┌─────────────────────────────────────┐
│         Identify survey type         │ ◄──────┐
│                 810                  │        │
└─────────────────────────────────────┘        │
                   │                            │
                   ▼                            │
┌─────────────────────────────────────┐        │
│       Extract survey parameters      │        │
│                 820                  │        │
└─────────────────────────────────────┘        │
                   │                            │
                   ▼                            │
┌─────────────────────────────────────┐        │
│    Identify type of footprint to     │        │
│             reduce  830              │        │
└─────────────────────────────────────┘        │
                   │                            │
                   ▼                            │
┌─────────────────────────────────────┐        │
│ Extract parameters for footprint     │        │
│          reduction  840              │        │
└─────────────────────────────────────┘        │
                   │                       Yes  │
                   ▼                            │
             ◇ Another Survey? ◇ ───────────────┘
                   850
                   │  No
                   ▼
┌─────────────────────────────────────┐
│     Configure footprint reduction    │
│                 860                  │
└─────────────────────────────────────┘
                   │
                   ▼
┌─────────────────────────────────────┐
│        Reduce footprint(s)           │
│                 870                  │
└─────────────────────────────────────┘
```

# Fig. 8

910

x-coordinate

920

Wavenumber - x

930

90

0

-90

Angle (degrees)

Wavenumber - x

# Fig. 9

Fig. 10

Fig. 11

Fig. 12

Fig. 13

1400

-90               0               90

Angle (degrees)

# Fig. 14

1500

```
┌─────────────────────────────┐
│   Generate FWI gradient     │ ◄─────┐
│         1510                │       │
└─────────────────────────────┘       │
              │                        │
              ▼                        │
┌─────────────────────────────┐       │
│  Reduce footprint from      │       │
│        gradient             │       │
│         1520                │       │
└─────────────────────────────┘       │
              │                        │
              ▼                        │
┌─────────────────────────────┐       │
│     Update FWI model        │       │
│         1530                │       │
└─────────────────────────────┘       │
              │                        │
              ▼                        │
           ◇◇◇◇◇◇                Yes   │
         ◇        ◇ ──────────────────┘
        ◇ Continue  ◇
        ◇ updates?  ◇
         ◇  1550   ◇
           ◇◇◇◇◇◇
              │ No
              ▼
┌─────────────────────────────┐
│    Inversion complete       │
│         1560                │
└─────────────────────────────┘
```

# Fig. 15

1600

```
Identify survey type
        1610
```

```
Extract sail line directions
        1620
```

```
Identify type of footprint as linear
        1630
```

```
Extract local linear directions
for footprint reduction
        1640
```

Another Survey?
1650

Yes

No

```
Configure footprint reduction
        1660
```

```
Reduce footprint(s)
        1670
```

# Fig. 16

1700

Identify survey type
1710

Identified as gridded using symmetry metric:
Extract node spacings
1720

Footprint identified as localized rather than
linear (e.g., sparse node)
1730

Extract local node pattern to parameterize
footprint reduction
1740

Another Survey?
1750

Yes

No

Configure footprint reduction
1760

Reduce footprint(s)
1770

Fig. 17

Method 1800

```
┌──────────────────────────────────────────────────────────────────┐
│                                                                    │
│      Access data that include seismic data of a subsurface region  │
│                              1804                                  │
│                                                              ┌──────┤
│                                                              │ 1805 │
└──────────────────────────────────────────────────────────────────┘
                                  │
                                  ▼
┌──────────────────────────────────────────────────────────────────┐
│                                                                    │
│    Automatically identify a type of acquisition footprint artefact │
│      to reduce based at least in part on at least a portion of the │
│                              data                                  │
│                              1808                                  │
│                                                              ┌──────┤
│                                                              │ 1809 │
└──────────────────────────────────────────────────────────────────┘
                                  │
                                  ▼
┌──────────────────────────────────────────────────────────────────┐
│                                                                    │
│   Automatically extract acquisition footprint artefact reduction   │
│    parameters based at least in part on the type of acquisition    │
│                      footprint artefact                            │
│                              1812                                  │
│                                                              ┌──────┤
│                                                              │ 1813 │
└──────────────────────────────────────────────────────────────────┘
                                  │
                                  ▼
┌──────────────────────────────────────────────────────────────────┐
│                                                                    │
│   Reduce the acquisition footprint artefact using the acquisition  │
│            footprint artefact reduction parameters                 │
│                              1816                                  │
│                                                              ┌──────┤
│                                                              │ 1817 │
└──────────────────────────────────────────────────────────────────┘
```

```
┌────────────────────────────────────────────────────────────────────┐
│                          ┌──────────────────────┐                    │
│                          │  Computer(s) 1864     │                    │
│ Computing   Storage 1862 │ ┌──────────┬────────┐ │  ┌─────────────┐  │
│ System                   │ │Processor │ Memory │ │  │Network(s)1870│  │
│ 1860     ▢▢ ··· ▢        │ │(s)       │        │ │  └─────────────┘  │
│                          │ │1866      │ 1868   │ │  ┌─────────────┐  │
│                          │ └──────────┴────────┘ │  │Instructions │  │
│                          └──────────────────────┘  │1880         │  │
│                                                     └─────────────┘  │
└────────────────────────────────────────────────────────────────────┘
```

# Fig. 18

Framework <u>1900</u>

| | | | |
|---|---|---|---|
| RTM | FDMOD | ABM | Gaussian PM |

Depth Pack

| | | |
|---|---|---|
| KPSDM | Tomo | Other(s) |

Time Pack

| | | |
|---|---|---|
| KPSTM | GSMP | XIMP |

| Foundation | Desktop |
|---|---|

Development Tools (e.g., SDK, etc.)

# Fig. 19

System Components 2000

Processor(s)
2002

Memory/Storage
2004

Bus 2008

I/O Device 2006

Network System 2010

Component(s)
2022-1

Component(s)
2022-2

Network
2020

Component(s)
2022-3

Component(s)
2022-N

# Fig. 20

Europäisches
Patentamt

European
Patent Office

Office européen
des brevets

# EUROPEAN SEARCH REPORT

Application Number

EP 25 16 1700

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOZHEVIN A. ET AL: "Automatic Acquisition Footprint Attenuation: Deep Learning Approach", 84TH EAGE ANNUAL CONFERENCE & EXHIBITION, 30 June 2023 (2023-06-30), pages 1-5, XP093290684, DOI: 10.3997/2214-4609.2023101141 | 1-5, 10-12, 14,15 | INV. G01V1/36 G01V1/28 G01V1/38 |
| A | * pages 1-5; figures 1-3 * | 6-9,13 | |
| X | GUASCH LLUÍS ET AL: "Adaptive waveform inversion: Practice", GEOPHYSICS, vol. 84, no. 3, 1 May 2019 (2019-05-01), pages R447-R461, XP093290308, US ISSN: 0016-8033, DOI: 10.1190/geo2018-0377.1 * pages 1-15; figures 1-13 * | 1-9, 13-15 | |
| X | FENG QIAN ET AL: "Unsupervised Seismic Footprint Removal With Physical Prior Augmented Deep Autoencoder", ARXIV.ORG, CORNELL UNIVERSITY LIBRARY, 201 OLIN LIBRARY CORNELL UNIVERSITY ITHACA, NY 14853, 8 February 2023 (2023-02-08), XP091510794, DOI: 10.1109/TGRS.2023.3277973 * pages 1-19; figures 1-14 * | 1-5, 10-12, 14,15 | |
| X | Soubaras Robert: "ATTENUATION OF ACQUISITION FOOTPRINT FOR NON-ORTHOGONAL 3D GEOMETRIES", , 30 May 2002 (2002-05-30), XP093291982, Retrieved from the Internet: URL:https://www.earthdoc.org/content/papers/10.3997/2214-4609-pdb.5.C009 | 1-5,9, 14,15 | |
| A | * pages 1-4; figures 1-6 * | 6-8,13 | |

**TECHNICAL FIELDS SEARCHED (IPC)**

G01V

The present search report has been drawn up for all claims

| Place of search | Date of completion of the search | Examiner |
|---|---|---|
| The Hague | 4 July 2025 | Gassmann, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    .............................................................................................

& : member of the same patent family, corresponding
document

EPO FORM 1503 03.82 (P04C01)

4